(19) Europäisches Patentamt
European Patent Office
Office européen des brevets

(11) **EP 4 570 568 A1**

(12) **EUROPEAN PATENT APPLICATION**

(43) Date of publication:
**18.06.2025 Bulletin 2025/25**

(21) Application number: **24215818.6**

(22) Date of filing: **27.11.2024**

(51) International Patent Classification (IPC):
**B60L 3/12** (2006.01)     **B62D 5/04** (2006.01)

(52) Cooperative Patent Classification (CPC):
**B60L 3/12; B60W 50/14; B62D 5/046;**
**B62D 5/0481; B62D 5/0469**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.12.2023 JP 2023210041**

(71) Applicant: **TOYOTA JIDOSHA KABUSHIKI
KAISHA
Aichi-ken, 471-8571 (JP)**

(72) Inventor: **SHONO, Shoichi
Toyota-shi, 471-8571 (JP)**

(74) Representative: **J A Kemp LLP
80 Turnmill Street
London EC1M 5QU (GB)**

(54) **VEHICLE CONTROL DEVICE**

(57)     A vehicle control device (10) includes an acquisition unit (111) configured to acquire traveling environment information (Je) of a vehicle (1), a situation determination unit (112) configured to determine whether or not a predetermined situation where a disturbance acts on a wheel (3) such that an operation is changed has occurred, based on the traveling environment information (Je), and a suppression unit (113) configured to suppress restriction of protection control of protecting an electric motor by restricting a current supplied to the electric motor, in a case where the predetermined situation has occurred.

FIG. 2

**Description**

BACKGROUND OF THE INVENTION

1. Field of the Invention

The present disclosure relates to a vehicle control device.

2. Description of Related Art

In the related art, a steering system (hereinafter, referred to as a "related-art device") disclosed in Japanese Unexamined Patent Application Publication No. 2023-8160 (JP 2023-8160 A) has been known. The related-art device includes an electric motor that turns a turning wheel of wheels to control a turning operation, and prohibits supply of a current exceeding an upper limit value to the electric motor as protection control of the electric motor.

SUMMARY OF THE INVENTION

In recent years, as in the related-art device, an electric motor that controls a drive state (rotation state), a braking state (stop state), and a turning state that are operations of the wheels is mounted in a vehicle. Then, when the mounted electric motor is operated to control the operation of the wheel, for example, as in the related-art device, in a situation where a temperature of the electric motor, a drive circuit, or the like rises due to an operation of the electric motor, protection control of restricting a current supplied to the electric motor may be executed from a viewpoint of protecting a system from overheating.

In a situation where the vehicle travels in a traveling environment where an obstacle that can apply a disturbance to the wheel is present, controlling the operation of the wheel to resist the disturbance applied from the obstacle to cause the vehicle to travel, to stop the vehicle, or to turn the turning wheel is needed. In this case, in general, the electric motor needs to generate a larger force (torque) than in a normal case where the vehicle travels in a traveling environment where no obstacle is present. Therefore, a larger current is supplied to the electric motor, the drive circuit, or the like than in a normal case. In a situation where a large current is supplied, overheating is likely to occur in the electric motor, the drive circuit, or the like, so that the protection control is more likely to intervene in a normal case.

However, in a case where the protection control is executed, the current supplied to the electric motor is restricted, and thus a needed force (torque) may not be obtained with a force (torque) generated by the electric motor. In this case, even when the operation of the wheel is controlled by using the electric motor, a force (torque) generated by the electric motor may not be able to resist the disturbance. As a result, the operation of the wheel may be changed by the disturbance, and the disturbance may affect traveling of the vehicle.

The present disclosure provides a vehicle control device that can reduce an influence of a disturbance on an operation of wheel in a situation where the operation of the wheel may be changed by the disturbance.

An aspect of the present disclosure relates to a vehicle control device including an acquisition unit, a situation determination unit, and a suppression unit. The acquisition unit is configured to acquire traveling environment information representing a traveling environment of a vehicle including an electric motor configured to control an operation of at least one wheel. The situation determination unit is configured to determine whether or not a predetermined situation where a disturbance acts on the at least one wheel such that the operation is changed has occurred, based on the traveling environment information. The suppression unit is configured to suppress restriction of protection control of protecting the electric motor by restricting a current supplied to the electric motor, in a case where the predetermined situation has occurred.

In the aspect of the present disclosure, the vehicle control device may further include a cutoff operation determination unit configured to determine presence or absence of a cutoff operation of cutting off supply of the current in the predetermined situation, a situation change determination unit configured to determine whether or not the predetermined situation is changed to a stable situation where the operation is not changed, in a case where the cutoff operation is performed, and a permission unit configured to permit execution of a cutoff process in accordance with the cutoff operation, in a case where the predetermined situation is changed to the stable situation.

In the aspect of the present disclosure, the vehicle control device may further include a notification unit configured to notify, in a case where the cutoff operation is performed and the predetermined situation is not changed to the stable situation, that the cutoff process is not executable.

In the aspect of the present disclosure, the predetermined situation may be a situation where an obstacle capable of changing the operation by applying the disturbance to the at least one wheel is present.

In the aspect of the present disclosure, the predetermined situation may be a situation where the vehicle travels on an uneven road.

In the aspect of the present disclosure, the suppression unit may be configured to suppress the restriction by temporarily interrupting execution of the protection control.

In the aspect of the present disclosure, the suppression unit may be configured to suppress the restriction such that a decrease amount in a case where the current is decreased in the protection control is smaller than a decrease amount in a case where the predetermined situation has not occurred.

In the aspect of the present disclosure, the suppression unit may be configured to suppress the restriction such that a lower limit value in a case where the current is decreased in the protection control is larger than a lower limit value in a case where the predetermined situation has not occurred.

In the aspect of the present disclosure, the at least one wheel may include right and left wheels of the vehicle, and the situation determination unit may be configured to determine that the predetermined situation has occurred in a case where a deviation between vehicle heights of the right and left wheels is larger than a right-and-left wheel deviation threshold value set in advance.

In the aspect of the present disclosure, the situation determination unit may be configured to determine that the predetermined situation has occurred in a case where a transfer case mounted in the vehicle is set to a LOW range representing a low speed or in a case where a differential gear mounted in the vehicle is set to a differential lock representing a lock.

In the aspect of the present disclosure, the situation determination unit may be configured to determine that the predetermined situation has occurred in a case where a magnitude of the current supplied to the electric motor to control the operation is larger than a magnitude of an upper limit value set in advance.

In the aspect of the present disclosure, the vehicle control device may further include a restore command unit configured to restore the restriction of the protection control suppressed by the suppression unit in the predetermined situation to the restriction of the protection control before being suppressed by the suppression unit in the predetermined situation, in a case where the predetermined situation is changed to a stable situation where the operation is not changed, based on the traveling environment.

In the aspect of the present disclosure, among a drive system for driving the at least one wheel, a brake system for braking the at least one wheel, and a steering system for turning the wheel, the electric motor may be provided in at least the steering system.

In the aspect of the present disclosure, the steering system may be a steer-by-wire type steering system including an operation device including an operation member operated by a driver, a turning device including the electric motor and configured to turn the at least one wheel, and a controller configured to control the current supplied to the electric motor to realize turning of the at least one wheel in accordance with an operation of the operation member via the turning device.

In the aspect of the present disclosure, the at least one wheel may include right and left wheels of the vehicle, and the steering system may be a steer-by-wire type steering system including an operation device including an operation member operated by a driver, a pair of turning devices configured to turn the right and left wheels, respectively, and a controller configured to control the current supplied to the electric motor provided in each of the turning devices to realize turning of each of the right and left wheels in accordance with an operation of the operation member via each of the turning devices.

According to the aspect of the present disclosure, the suppression unit can suppress the restriction of the protection control of protecting the electric motor in a case where the vehicle is in the predetermined situation where the disturbance acts such that the operation of the wheel is changed. As a result, in a case where the vehicle is in the predetermined situation, the electric motor can be supplied with the current with the restriction suppressed, and the electric motor can generate a force (torque) to resist the disturbance acting on the wheel. Therefore, in the predetermined situation, the influence of the disturbance on the operation of the wheel can be reduced.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a schematic configuration diagram of a vehicle according to a first embodiment;
FIG. 2 is a functional block diagram of a vehicle control device;
FIG. 3 is a flowchart of a control program according to the first embodiment;
FIG. 4 is a diagram showing a predetermined situation and a change in a state of a wheel;
FIG. 5 is a diagram showing suppression of restriction of protection control via a suppression unit of FIG. 2 according to the first embodiment;
FIG. 6 is a schematic configuration diagram of a vehicle according to a second embodiment;
FIG. 7 is a diagram showing a configuration of a wheel disposition module of FIG. 6;
FIG. 8 is a flowchart of a control program according to the second embodiment; and

FIG. 9 is a diagram showing suppression of restriction of protection control via the suppression unit of FIG. 2 according to the second embodiment.

DETAILED DESCRIPTION OF EMBODIMENTS

Hereinafter, a vehicle control device 10 that is an embodiment of the present disclosure will be described in detail with reference to the drawings. The present disclosure can be carried out in various forms in which various modifications and improvements are made based on the knowledge of those skilled in the art in addition to the following embodiments.

A. First Embodiment

1. Configuration of Vehicle 1 to Which Vehicle Control Device 10 Is Applied

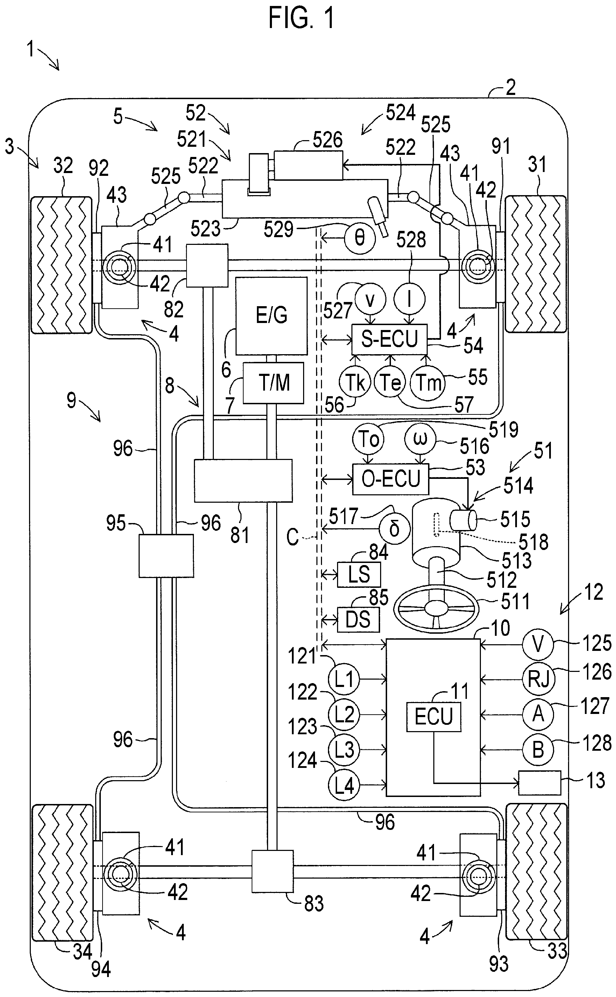

In the first embodiment, the vehicle control device 10 is applied to a vehicle 1 shown in FIG. 1. The vehicle 1 includes a vehicle body 2, wheels 3 disposed in front, rear, right, and left sides, and a suspension unit 4 that supports the vehicle body 2 and each of the wheels 3. The wheels 3 are composed of a right front wheel 31, a left front wheel 32, a right rear wheel 33, and a left rear wheel 34. The suspension unit 4 is an independent suspension unit disposed corresponding to each of the wheels 3, and has, for example, a coil spring 41 and a hydraulic shock absorber 42. The suspension unit 4 may be, for example, an air suspension unit including an air spring.

The vehicle 1 includes, for example, a steering system 5 for turning the right front wheel 31 and the left front wheel 32 as turning wheels. Here, in the first embodiment, a case where a control target of the vehicle control device 10 is the steering system 5 will be described as an example. The steering system 5 includes an electric motor (mainly, a turning motor 526 described below) that controls a turning operation in which the right front wheel 31 and the left front wheel 32 are turned, as the operation of the wheels, and is a steer-by-wire type steering system including an operation device 51 and a turning device 52 that are mechanically independent of each other.

The operation device 51 mainly includes a steering wheel 511, a steering shaft 512, a steering column 513, and a reaction force applying mechanism 514. The steering wheel 511 is an operation member that is steered by a driver. The steering shaft 512 has the steering wheel 511 attached to a distal end thereof and is rotatably held by the steering column 513. The steering column 513 is supported by an instrument panel reinforcement (not shown).

The reaction force applying mechanism 514 uses the reaction force motor 515 as a drive force source and applies a reaction force Fc (strictly, a "reaction force torque", but hereinafter referred to as an "operation reaction force Fc" in common use) against the steering operation to the steering wheel 511 via the steering shaft 512. As the reaction force motor 515, for example, a three-phase brushless DC motor can be described. Here, the reaction force motor 515 has its own motor rotation angle sensor 516 that detects a motor rotation angle $\omega$ within one rotation, for switching an energization phase in the power supply to the reaction force motor 515. Since the reaction force applying mechanism 514 has a general structure including a reducer or the like, the detailed description of the structure will be omitted.

The operation device 51 has an operation angle sensor 517 that detects an operation angle $\delta$ of the steering wheel 511 as a steering operation amount. Here, in a case where a position of the steering wheel 511 in a straight traveling state of the vehicle 1 is set as a neutral position, a rotation angle in each of the right and left directions from the neutral position is the operation angle $\delta$ of the steering wheel 511.

The operation device 51 has a torsion bar 518 incorporated in the steering shaft 512, as in a so-called general power steering system. The operation device 51 has an operation torque sensor 519 that detects an operation torque To as an operation force applied to the steering wheel 511 by the driver based on a torsion amount of the torsion bar 518.

The turning device 52 integrally turns the right front wheel 31 and the left front wheel 32 supported on the vehicle body 2 to be turnable by revolving steering knuckles 43 that constitute the suspension unit 4. That is, the turning operations that are the operations of the right front wheel 31 and the left front wheel 32 are mainly controlled by the turning device 52. The turning device 52 has a turning actuator 521 as a main component.

The turning actuator 521 mainly includes a steering rod 522, a housing 523, and a rod moving mechanism 524. Both ends of the steering rod 522 are connected to the right and left steering knuckles 43, respectively, via a ring rod 525. The steering rod 522 is also referred to as a "rack bar". The housing 523 is fixed to the vehicle body and supports the steering rod 522 to be movable in the right and left directions.

The rod moving mechanism 524 moves the steering rod 522 in the right and left directions by using the turning motor 526 that is the electric motor as a drive source. A case where the rod moving mechanism 524 mainly includes a ball screw mechanism including a ball groove (not shown) provided in the steering rod 522 and a nut (not shown) that is screwed into the ball groove via a bearing hole (not shown) and is rotated by the turning motor 526 can be described as an example.

Since the ball screw mechanism has a general structure, the description of the specific structure of the rod moving mechanism 524 will be omitted. The structure of the rod moving mechanism 524 is not limited to the ball screw mechanism, and another mechanism can be used.

Here, similarly to the reaction force motor 515, as the turning motor 526, for example, a three-phase brushless DC motor can be described. The turning motor 526 also has its own motor rotation angle sensor 527 that detects a motor rotation angle v within one rotation, for switching the energization phase in the power supply to the turning motor 526. The turning motor 526 has its own current sensor 528 for detecting a current I (hereinafter, may be referred to as a "turning current I") actually supplied to the turning motor 526.

The turning device 52 has a turning angle sensor 529 that detects turning angles $\theta$ of the right front wheel 31 and the left front wheel 32 that are the turning wheels. Here, in a case where a position of the steering rod 522 in the straight traveling state of the vehicle 1 is set as the neutral position, movement amounts (absolute amounts) in the right and left directions from the neutral position are the turning angles $\theta$ of the right front wheel 31 and the left front wheel 32.

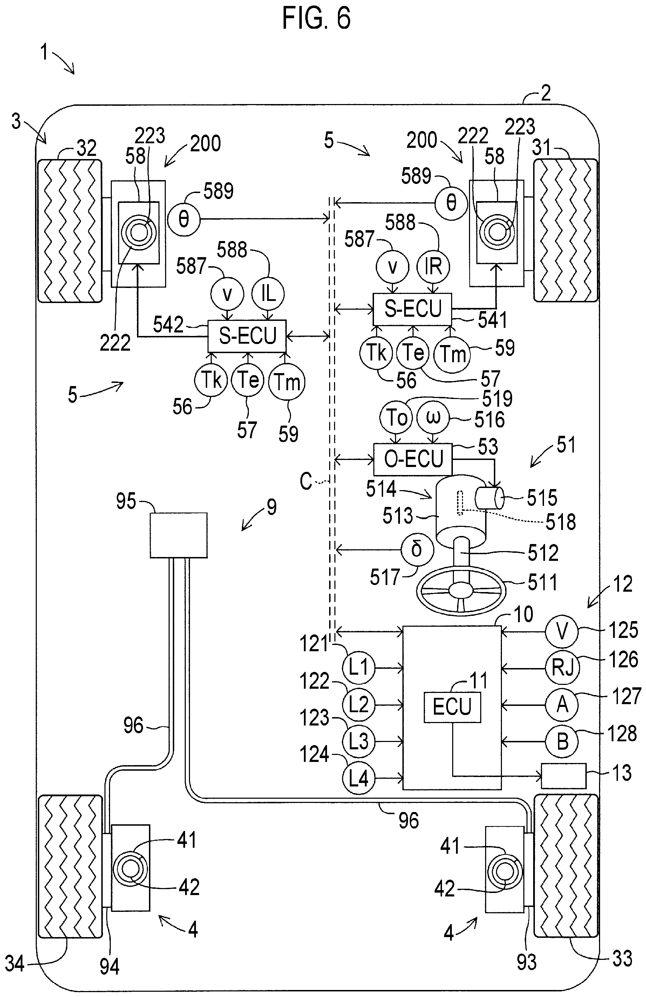

The control of the operation device 51, more specifically, the control of the operation reaction force Fc, that is, the control of the reaction force motor 515 of the operation device 51 is executed by an operation electronic control unit 53 (hereinafter, simply referred to as an "operation ECU 53"). The operation ECU 53 is composed of a microcomputer including a central processing unit (CPU), a read only memory (ROM), a random access memory (RAM), various interfaces, an inverter that is a driver (drive circuit) of the reaction force motor 515, and the like. In FIG. 1 (FIG. 6 described below), the operation ECU 53 is shown as "O-ECU 53".

The control of the turning device 52, more specifically, the control of the turning angle $\theta$, that is, the control of the turning motor 526 of the turning device 52 is executed by a turning electronic control unit 54 (hereinafter, may be referred to as a "turning ECU 54"). The turning ECU 54 is composed of a microcomputer including a CPU, a ROM, a RAM, and various interfaces, an inverter that is a driver (drive circuit) of the turning motor 526, and the like. In FIG. 1, the turning ECU 54 is shown as "S-ECU 54".

The CPU sequentially executes a predetermined program to read data, to execute numerical calculation, and to output a calculation result. The ROM stores a program, a map, or the like executed by the CPU. The RAM temporarily stores data or the like. The various interfaces are connected to the motor rotation angle sensor 516, the operation angle sensor 517, and the operation torque sensor 519 in the operation ECU 53, and are connected the motor rotation angle sensor 527, the current sensor 528, and the turning angle sensor 529 in the turning ECU 54.

Here, the operation ECU 53 and the turning ECU 54 are communicable with each other by being connected to a communication line C via various interfaces. As the communication line C, for example, car area network or controllable area network (CAN) or a dedicated communication line other than the CAN can be described.

A turning force generated by the turning actuator 521 of the turning device 52 to turn the wheels 3 (specifically, the right front wheel 31 and the left front wheel 32) may be a relatively large force in a traveling environment where an obstacle as described below is present or the vehicle travels on an uneven road. That is, a relatively large turning current I may be supplied to the turning motor 526 of the turning actuator 521.

Therefore, the steering system 5 has a temperature sensor 55 for detecting a motor temperature Tm that is a temperature of the turning motor 526, from the viewpoint of protecting the system from overheating. The steering system 5 also has a temperature sensor 56 for detecting a substrate temperature Tk that is a temperature of a substrate of the drive circuit included in the turning ECU 54, from the viewpoint of protecting the system from overheating. Further, the steering system 5 has a temperature sensor 57 for detecting an environment temperature Te that is a temperature of an ambient environment. The motor temperature Tm detected by the temperature sensor 55, the substrate temperature Tk detected by the temperature sensor 56, and the environment temperature Te detected by the temperature sensor 57 are output to the turning ECU 54 via the various interfaces.

Here, regarding the control of the steering system 5, turning control that is the control of the turning device 52 and reaction force control that is the control of the reaction force applying mechanism 514 of the operation device 51 will be described.

The turning control is control of turning the right front wheel 31 and the left front wheel 32 in accordance with a turning request, that is, in accordance with the operation angle $\delta$ of the steering wheel 511 in a case of manual driving by the driver. The turning control is executed by the turning ECU 54. Hereinafter, normal control that is the control in a normal situation and protection control that is control of protecting the turning motor 526 from overheating will be described.

In the steering system 5, the motor rotation angle $\omega$ of the reaction force motor 515 of the operation device 51 and the operation angle $\delta$ of the steering wheel 511 are in a relationship that provides a predetermined gear ratio. Therefore, the operation ECU 53 acquires the operation angle $\delta$ based on the motor rotation angle $\omega$ detected by the motor rotation angle sensor 516. Then, the turning ECU 54 acquires information on the operation angle $\delta$ from the operation ECU 53, and decides a target turning angle $\theta d$ that is a target of the turning angle $\theta$ of the right front wheel 31 and the left front wheel 32 by multiplying a steering gear ratio Rg set for the acquired operation angle $\delta$ according to the following expression (1).

$$\theta d = Rg \times \delta \dots \text{Expression (1)}$$

In the steering system 5, the control of the turning angle θ of the right front wheel 31 and the left front wheel 32 is executed by using the motor rotation angle v instead of the turning angle θ. Therefore, the turning ECU 54 decides a target motor rotation angle vd that is a target of the motor rotation angle v of the turning motor 526 based on the target turning angle θd decided according to the expression (1). The turning ECU 54 detects an actual motor rotation angle v of the turning motor 526 via the motor rotation angle sensor 527, and decides a motor rotation angle deviation Δv that is a deviation of the motor rotation angle v with respect to the target motor rotation angle vd according to the following expression (2).

$$\Delta v = vd - v \ldots \text{Expression (2)}$$

Here, in the steering system 5, the turning ECU 54 decides a torque Ts (hereinafter, referred to as a "turning torque Ts") to be generated by the turning motor 526 according to a feedback control rule based on the motor rotation angle deviation Δv. That is, the turning ECU 54 decides the turning torque Ts according to the following expression (3).

$$Ts = Gp \times \Delta v + Gi \times \int \Delta vdt + Gd \times d\Delta v/dt \ldots \text{Expression (3)}$$

Note that, in the expression (3), the first term is a proportional term, the second term is an integral term, and the third term is a differential term. In the expression (3), Gp represents a proportional gain, Gi represents an integral gain, and Gd represents a differential gain.

In the turning control, the turning ECU 54 supplies the turning motor 526 with the turning current I in accordance with the turning torque Ts decided according to the expression (3). Here, the turning current I is approximately proportional to the turning torque Ts. Accordingly, the turning ECU 54 decides the turning current I to be supplied to the turning motor 526 based on the decided turning torque Ts, for example, according to the proportional relationship. The turning ECU 54 operates the turning motor 526 by supplying the turning current I to the turning motor 526 via, for example, the inverter (not shown) and turns the wheels 3, that is, the right front wheel 31 and the left front wheel 32, until the target turning angle θd is obtained.

In the steering system 5, when a large turning current I is supplied to the turning motor 526 of the turning device 52 for a long time, the turning motor 526 or the drive circuit of the turning motor 526 (the driver, for example, the inverter) may be overheated. For the protection from such overheating, the steering system 5, particularly, the turning device 52 is usually provided with restriction on the turning current I. More specifically, the turning ECU 54 provides an upper limit value Ijs with respect to the turning current I supplied to the turning motor 526 in accordance with the traveling environment of the vehicle 1, and basically prohibits the supply of the turning current I exceeding the upper limit value Ijs. The turning ECU 54 executes the protection control of restricting the turning current I to be supplied to be equal to or smaller than the upper limit value Ijs when the turning current I decided according to the turning torque Ts calculated according to the expression (3) exceeds the upper limit value Ijs, as described above.

Note that, as will be described below, in a case where the vehicle 1 travels in the predetermined situation, the turning ECU 54 suppresses the restriction such that the protection control is not executed temporarily, or temporarily suppresses restriction of a decrease amount of the turning current I caused by the protection control and executes the protection control until the vehicle 1 escapes from the predetermined situation. Here, the upper limit value Ijs is set assuming, as the predetermined situation described below, for example, a situation where a disturbance (load) acting on the wheels 3 from the obstacle, such as a rock, present on a road surface such that the operation of the wheels 3 is changed is large, and the operation of the wheels 3 needs to be maintained to resist the disturbance, that is, a situation where the turning torque Ts, that is, the turning current I is larger than in a situation where the vehicle 1 travels in a normal situation. Therefore, in a situation where the turning current I is larger than the upper limit value Ijs, a determination can be made that the vehicle 1 is in the predetermined situation.

The reaction force control is a control of applying the operation reaction force Fc to the steering wheel 511 to give the driver an operation feeling for the steering operation. The reaction force control is executed by the operation ECU 53. Specifically, the operation ECU 53 decides the operation reaction force Fc according to the following expression (4) using two components of a turning load dependent component Fs and an operation force dependent decrease component Fa.

$$Fc = Fs - Fa \ldots \text{Expression (4)}$$

Here, the turning load dependent component Fs in the expression (4) is a component related to the turning force (turning torque Ts of the turning motor 526) needed to turn the right front wheel 31 and the left front wheel 32, and is decided based on the turning current I supplied to the turning motor 526. The detailed description will be omitted, but as the turning current I is larger, the turning load of the right front wheel 31 and the left front wheel 32 is recognized to be larger, and the turning load dependent component Fs is decided to be a larger value. Information on the actual turning current I supplied to the turning motor 526 is supplied from the turning ECU 54 to the operation ECU 53 via the communication line C.

The operation force dependent decrease component Fa in the expression (4) is, for example, a component for giving a driver an operation feeling in a power steering system in the related art. In the power steering system in the related art, generally, an assist torque corresponding to the operation torque To is generated, for example, by the electric motor and applied to the steering shaft 512.

Therefore, the operation force dependent decrease component Fa is decided according to the following expression (5) so as to reproduce the assist torque. The operation ECU 53 acquires the operation torque To via the operation torque sensor 519.

$$Fa = \beta \times To \dots \text{ Expression (5)}$$

Note that, in the expression (5), $\beta$ represents a gain for deciding the operation force dependent decrease component Fa.

The operation ECU 53 decides a reaction force current Ic that is a current supplied to the reaction force motor 515 according to the following expression (6), based on the operation reaction force Fc decided according to the expression (4). Then, the operation ECU 53 supplies the decided reaction force current Ic to the reaction force motor 515.

$$Ic = \alpha \times Fc \dots \text{ Expression (6)}$$

Note that $\alpha$ in the expression (6) represents a power decision coefficient set in advance.

Returning to the description of the configuration of the vehicle 1, the vehicle 1 according to the first embodiment includes an engine 6, a transmission 7, and a differential gear 8 to transmit a drive force, more specifically, a drive torque to each of the wheels 3. In the vehicle 1 according to the first embodiment, the differential gear 8 is composed of a center differential 81, a front differential 82, and a rear differential 83.

The engine 6 is a drive force source of the vehicle 1. The control of the engine 6 is executed by an engine electronic control unit (not shown). The drive torque generated by the engine 6 is transmitted to the transmission 7. The control of the transmission 7 is executed by a transmission electronic control unit (not shown). An input shaft of the transmission 7 is connected to the engine 6. An output shaft of the transmission 7 is connected to a center differential 81 that constitutes the differential gear 8. As a result, the drive torque is distributed from the output shaft of the transmission 7 to each of the wheels 3.

Specifically, the drive torque is distributed to the right front wheel 31 and the left front wheel 32 from the transmission 7 via the center differential 81 and the front differential 82. The drive torque is distributed to the right rear wheel 33 and the left rear wheel 34 from the transmission 7 via the center differential 81 and the rear differential 83. That is, the vehicle 1 according to the first embodiment is a four-wheel drive vehicle in which the right front wheel 31, the left front wheel 32, the right rear wheel 33, and the left rear wheel 34 can be drive wheels.

Here, the vehicle 1 according to the first embodiment includes a transfer switch 84 disposed in a vehicle cabin. As a result, the driver can switch between a "HI range" during normal traveling and a "LOW range" during traveling on a rough road. In the vehicle 1, for example, the center differential 81 has a function of a transfer case of the "HI range" or the "LOW range". The transfer switch 84 is configured to output a range signal LS to the vehicle control device 10 in a case where the switching to the LOW range is executed.

The front differential 82 can absorb a difference in rotation speed between the right front wheel 31 and the left front wheel 32. The rear differential 83 can absorb a difference in rotation speed between the right rear wheel 33 and the left rear wheel 34. The center differential 81 can absorb the difference in rotation speed between the right front wheel 31 and the left front wheel 32 and the difference in rotation speed between the right rear wheel 33 and the left rear wheel 34.

The vehicle 1 according to the first embodiment includes a differential lock switch 85 disposed in the vehicle cabin. As a result, for example, in a case where the vehicle 1 travels on the uneven road on which the obstacle is present, that is, in a case of so-called off-road traveling, the driver can switch, as needed, the center differential 81, the front differential 82, and the rear differential 83 to a differential lock state in which the difference in rotation speed is not absorbed. Then, the differential lock switch 85 is configured to output a differential lock signal DS to the vehicle control device 10 in a case where the switching to the differential lock state is executed.

Further, the vehicle 1 includes a brake system 9 for generating a braking force in each of the wheels 3. The brake system 9 according to the first embodiment includes a right front wheel brake 91, a left front wheel brake 92, a right rear wheel brake 93, a left rear wheel brake 94, a hydraulic fluid pressurization device 95, and a brake pipe 96.

Although not shown, each of the right front wheel brake 91, the left front wheel brake 92, the right rear wheel brake 93, and the left rear wheel brake 94 includes a brake disc that rotates integrally with the wheels 3, a pair of brake pads that presses the brake disc from both sides, and a brake caliper that fixes the brake pads. The brake caliper is connected to the hydraulic fluid pressurization device 95 via the brake pipe 96, and a hydraulic pressure circuit of the hydraulic fluid is formed between the hydraulic fluid pressurization device 95 and each of the right front wheel brake 91, the left front wheel brake 92, the right rear wheel brake 93, the left rear wheel brake 94. Therefore, in the brake system 9 according to the first embodiment, when the hydraulic fluid pressurization device 95 pressurizes the hydraulic fluid, the brake pads presses the brake disc, and as a result, a frictional force, that is, the braking force is generated.

The hydraulic fluid pressurization device 95 includes a reservoir tank that stores the hydraulic fluid and a master cylinder, a pump, or the like that pressurizes the hydraulic fluid. The reservoir tank, the master cylinder, and the pump are not shown. The control of the hydraulic fluid pressurization device 95 is executed by a brake electronic control unit (not shown). That is, the hydraulic fluid pressurization device 95 adjusts a pressure of the hydraulic fluid (hydraulic pressure) added to each of the brake pipes 96 in accordance with an instruction from the brake electronic control unit. As a result, the hydraulic fluid pressurization device 95 can cause each of the right front wheel brake 91, the left front wheel brake 92, the right rear wheel brake 93, and the left rear wheel brake 94 to generate the braking force having a different magnitude.

2. Configuration of Vehicle Control Device 10

As shown in FIG. 1, the vehicle control device 10 is mounted in the vehicle 1. The vehicle control device 10 includes an electronic control unit 11 (hereinafter, may be simply referred to as an "ECU 11") as a main component. The ECU 11 can communicate with a traveling environment detection unit 12 and a display device 13. Here, the ECU 11 can communicate with the operation ECU 53 and the turning ECU 54 via the communication line C.

The ECU 11 is composed of a microcomputer including a CPU, a ROM, a RAM, and various interfaces as main components. The CPU sequentially executes the predetermined program to read the data, to execute the numerical calculation, and to output the calculation result. The ROM stores a program, a map, or the like executed by the CPU. The RAM temporarily stores data or the like. The various interfaces are connected to the traveling environment detection unit 12 and the display device 13.

The traveling environment detection unit 12 detects the traveling environment of the vehicle 1, and outputs traveling environment information Je that collectively represents the detected various traveling environments to the ECU 11. The traveling environment detection unit 12 includes a vehicle height sensor 121, a vehicle height sensor 122, a vehicle height sensor 123, and a vehicle height sensor 124.

The vehicle height sensor 121 detects a vehicle height H1 that is changed due to expansion and contraction from a reference position of the suspension unit 4 provided in the right front wheel 31. The vehicle height sensor 122 detects a vehicle height H2 that is changed due to expansion and contraction from a reference position of the suspension unit 4 provided in the left front wheel 32. The vehicle height sensor 123 detects a vehicle height H3 that is changed due to expansion and contraction from a reference position of the suspension unit 4 provided in the right rear wheel 33. The vehicle height sensor 124 detects a vehicle height H4 that is changed by expansion and contraction from a reference position of the suspension unit 4 provided in the left rear wheel 34.

The traveling environment detection unit 12 includes a vehicle speed sensor 125 and a road surface state detection sensor 126. The vehicle speed sensor 125 detects a vehicle speed V of the vehicle 1. Here, the vehicle speed sensor 125 can calculate and detect the vehicle speed V based on wheel speeds that are the rotation speeds of the right front wheel 31, the left front wheel 32, the right rear wheel 33, and the left rear wheel 34.

The road surface state detection sensor 126 includes, for example, a stereo camera or a light detection and ranging or laser imaging detection and ranging (LiDAR), and detects a state of the road surface in a traveling direction of the vehicle 1. That is, the road surface state detection sensor 126 detects unevenness, the presence or absence of the obstacle, such as a rock or a gutter, an undulation, a rut, a steep slope, and the like on the road surface as the state of the road surface.

Here, the obstacle, such as the rock or the gutter, applies the disturbance (load) to the wheel 3 in a state where the wheels 3 (in particular, the right front wheel 31 and the left front wheel 32 that are the turning wheels in the first embodiment) are in contact with the obstacle, and can change the operation of the wheels 3 (in the first embodiment, the turning state). The road surface state detection sensor 126 outputs road surface information RJ representing the detected state of the road surface.

The traveling environment detection unit 12 can include an accelerator sensor 127 and a brake sensor 128. The accelerator sensor 127 detects an accelerator operation amount A by the driver. The accelerator sensor 127 detects, for example, a depression amount of an accelerator pedal (not shown) by the driver as the accelerator operation amount A. The brake sensor 128 detects a brake operation amount B by the driver. The brake sensor 128 detects, for example, a depression amount of a brake pedal (not shown) by the driver as the brake operation amount B. The traveling environment detection unit 12 includes, for example, a receiver of a global navigation satellite system (GNSS), and can also include a current position detection sensor that detects a current position of the vehicle 1 based on the received signal.

The display device 13 displays various information in accordance with an instruction from the ECU 11. The display device 13 is provided in the vehicle cabin, for example, and can display notification information J output from the ECU 11 to the driver or a passenger as described below.

2-1. Configuration of ECU 11

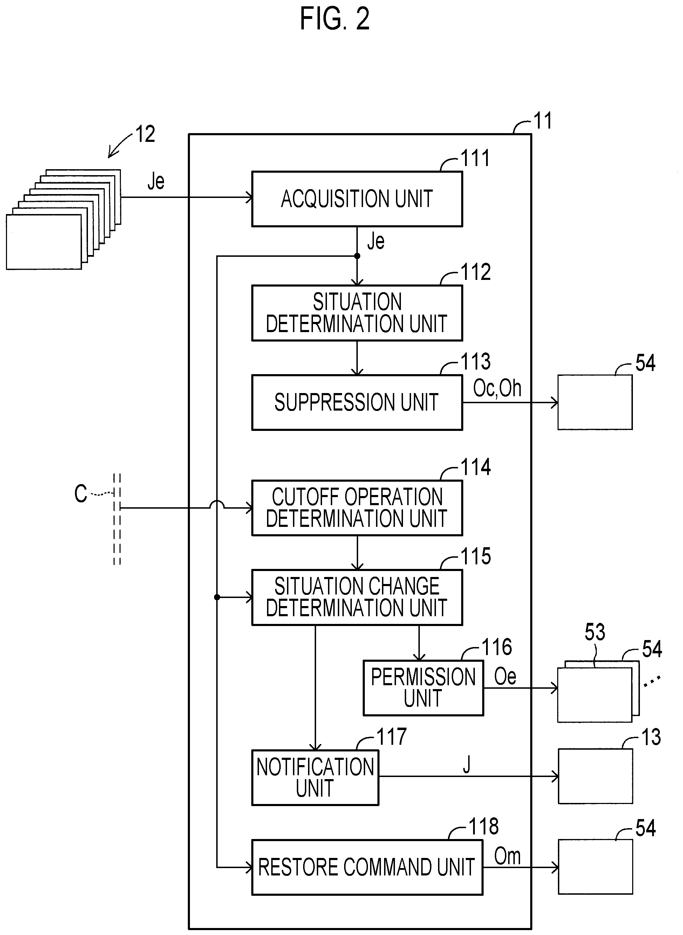

As shown in FIG. 2, the ECU 11 includes an acquisition unit 111, a situation determination unit 112, and a suppression unit 113. The ECU 11 includes a cutoff operation determination unit 114, a situation change determination unit 115, a permission unit 116, a notification unit 117, and a restore command unit 118.

The acquisition unit 111 collectively acquires the detection results detected by the traveling environment detection unit 12 as the traveling environment information Je. Specifically, the acquisition unit 111 can acquire the vehicle heights H1, H2, H3, H4 from the vehicle height sensors 121, 122, 123, 124, respectively, as the traveling environment information Je. The acquisition unit 111 can acquire, as the traveling environment information Je, the vehicle speed V from the vehicle speed sensor 125 along with the road surface information RJ including whether or not the obstacle is present on the road surface from the road surface state detection sensor 126. Further, the acquisition unit 111 can acquire, as the traveling environment information Je, the brake operation amount B from the brake sensor 128 along with the accelerator operation amount A from the accelerator sensor 127.

The situation determination unit 112 determines whether or not the predetermined situation where the disturbance acts on the wheels 3 such that the operation of the wheels 3 controlled by the electric motor, for example, the drive state (rotation state) of the wheels 3, the braking state (stop state) of the wheels 3, or the turning state of the wheels 3 is changed has occurred, based on the traveling environment represented by the traveling environment information Je acquired by the acquisition unit 111. In the first embodiment, the situation determination unit 112 determines whether or not a situation where the vehicle 1 travels on the uneven road on which the turning operations of the right front wheel 31 and the left front wheel 32 that are the turning wheels controlled by the turning motor 526 are changed, more specifically, the uneven road on which the obstacle, such as the rock, is present, has occurred, as the predetermined situation.

The suppression unit 113 suppresses the restriction of the protection control of protecting the turning motor 526 by restricting the turning current I supplied to the turning motor 526 based on a determination result of the situation determination unit 112, more specifically, based on the determination result indicating that the predetermined situation has occurred. Specifically, in a case where the predetermined situation has occurred, the suppression unit 113 suppresses the restriction such that the protection control that is executed as a principle in a case where the turning current I is larger than an upper limit value Tjs is not executed temporarily. That is, in a case where the suppression unit 113 suppresses the restriction in this way, the turning ECU 54 temporarily interrupts the protection control and does not execute the protection control.

In a case where the predetermined situation has occurred, the suppression unit 113 suppresses the restriction of the protection control that is decided to cut off the turning current I supplied to the turning motor 526, by deciding the decrease amount for decreasing the turning current I to be equal to or smaller than the upper limit value Tjs or a lower limit value Ik after the decrease. That is, in a case where the suppression unit 113 suppresses the restriction in this way, the turning ECU 54 executes the protection control of decreasing the turning current I to reach the decided decrease amount or lower limit value Ik, unlike the normal protection control.

The suppression unit 113 outputs a command Oc or a command Oh representing the restriction to be suppressed, to the turning ECU 54. That is, the suppression unit 113 outputs the command Oc to the turning ECU 54 in a case where the restriction of the protection control is suppressed such that the execution of the protection control is temporarily interrupted. The suppression unit 113 outputs the command Oh to the turning ECU 54 in a case where the restriction of the protection control is suppressed by deciding the decrease amount or the lower limit value Ik of the turning current I.

The cutoff operation determination unit 114 determines the presence or absence of a cutoff operation of cutting off the supply of the turning current I to the turning motor 526 based on various information acquired via, for example, the communication line C. Examples of the cutoff operation include an operation by the driver for switching an ignition switch (not shown), a power switch (not shown), or a start/stop switch (not shown) from an on state to an off state.

In a case where the cutoff operation determination unit 114 determines that the cutoff operation is performed, the situation change determination unit 115 determines whether or not the predetermined situation is changed to a stable situation where the turning operations of the right front wheel 31 and the left front wheel 32 are not changed, based on the traveling environment information Je acquired by the acquisition unit 111. Then, the situation change determination unit 115 supplies information representing whether the situation is not changed and is the predetermined situation or the situation is changed to the stable situation, to the permission unit 116 and the notification unit 117 as the determination result.

Here, in a case where the predetermined situation has occurred, for example, when the cutoff operation by the driver is received, the turning current I to the turning motor 526 is cut off. In this case, as described above, since the turning motor 526 does not generate a force (torque), the turning operations of the right front wheel 31 and the left front wheel 32 are more likely to be changed due to the action of the disturbance. As a result, the vehicle 1 is more likely to fall into an

9

unintended situation, such as a stuck state where the vehicle 1 cannot be moved forward or backward due to the presence of the obstacle.

On the other hand, in a case where the predetermined situation is changed to the stable situation, for example, in a case where the vehicle 1 is stably stopped, the turning operations (or the turning states) of the right front wheel 31 and the left front wheel 32 are less likely to be changed due to the action of the disturbance even though the turning motor 526 does not generate a force (torque). Therefore, the vehicle 1 is less likely to fall into the stuck state, for example.

Therefore, the permission unit 116 permits the execution of the cutoff process in accordance with the cutoff operation in a case where the situation is changed from the predetermined situation to the stable situation based on the determination result of the situation change determination unit 115. That is, the permission unit 116 permits, for example, various electronic control units including the operation ECU 53 and the turning ECU 54 that are mounted in the vehicle 1 to execute a predetermined cutoff process, solely in a case where the situation is changed to the stable situation. As a result, for example, the operation ECU 53 cuts off the supply of the current to the reaction force motor 515, and the turning ECU 54 cuts off the supply of the turning current I to the turning motor 526.

In a case where the cutoff operation is performed and the predetermined situation is not changed to the stable situation based on the determination result of the situation change determination unit 115, the notification unit 117 notifies that the cutoff process is not executable. Specifically, in a case where the predetermined situation still has occurred and the cutoff operation is performed, the notification unit 117 outputs the notification information J indicating that the cutoff operation by the driver is not received to the display device 13.

The restore command unit 118 restores the restriction of the protection control suppressed by the suppression unit 113 in the predetermined situation to the restriction of the protection control before being suppressed by the suppression unit 113 in the predetermined situation, in a case where the predetermined situation is changed to the stable situation where the operation of the wheels 3 is not changed, based on the traveling environment information Je acquired by the acquisition unit 111. That is, the restore command unit 118 issues a command to execute the normal protection control of protecting the turning motor 526 from overheating in accordance with the change from the predetermined situation to the stable situation.

Specifically, in a case where the suppression unit 113 outputs the command Oc to temporarily interrupt the execution of the protection control in accordance with the change to the stable situation, the restore command unit 118 outputs a restore command Om to the turning ECU 54 such that the execution of the protection control is restarted. In a case where the suppression unit 113 outputs the command Oh such that the protection control is executed by deciding the decrease amount or the lower limit value Ik of the turning current Iin accordance with the change to the stable situation, the restore command unit 118 outputs the restore command Om to the turning ECU 54 such that the normal protection control is executed.

3. Description of Process of Vehicle Control Device 10

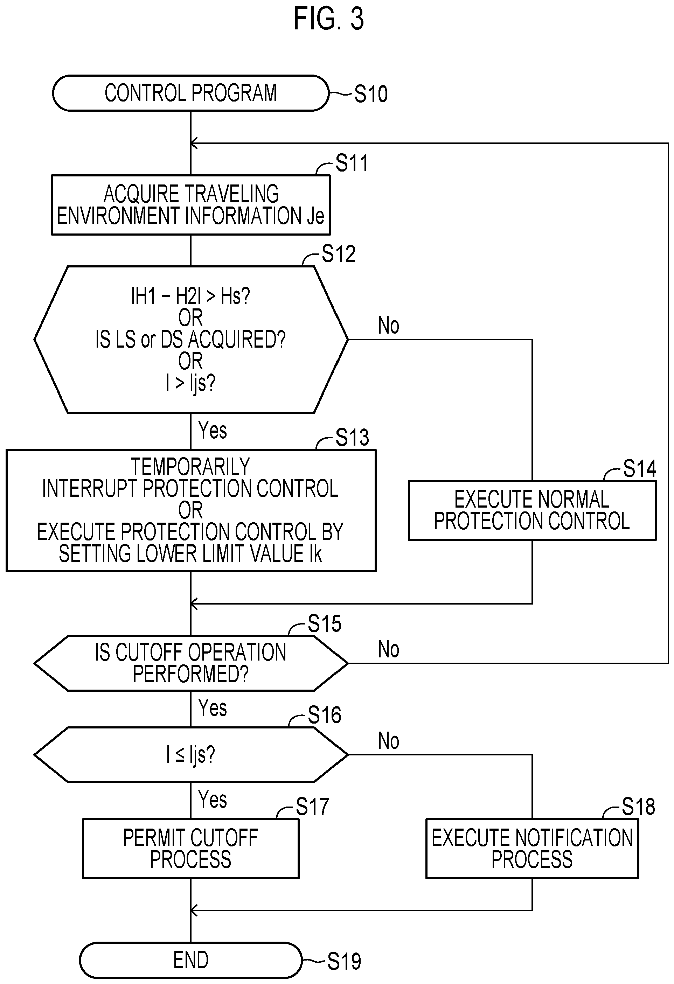

Next, a process via the vehicle control device 10 will be described. Specifically, the ECU 11 of the vehicle control device 10 executes a control program shown in a flowchart of FIG. 3.

The ECU 11 (more specifically, the CPU of the microcomputer constituting the ECU 11) starts the execution of the control program in step S10. In subsequent step S11, the ECU 11 acquires the traveling environment information Je representing the environment where the vehicle 1 is currently traveling. That is, the ECU 11 acquires the vehicle speed V from the traveling environment detection unit 12, and, in the first embodiment, acquires the vehicle height H1 and the vehicle height H2 corresponding to the right front wheel 31 and the left front wheel 32 that are the turning wheels. Further, the ECU 11 acquires the range signal LS in a case where the transfer switch 84 is operated, and acquires the differential lock signal DS in a case where the switching to the differential lock state is executed. The ECU 11 acquires the turning current I detected by the current sensor 528 from the turning ECU 54 of the turning device 52, and acquires the turning angle $\theta$ detected by the turning angle sensor 529.

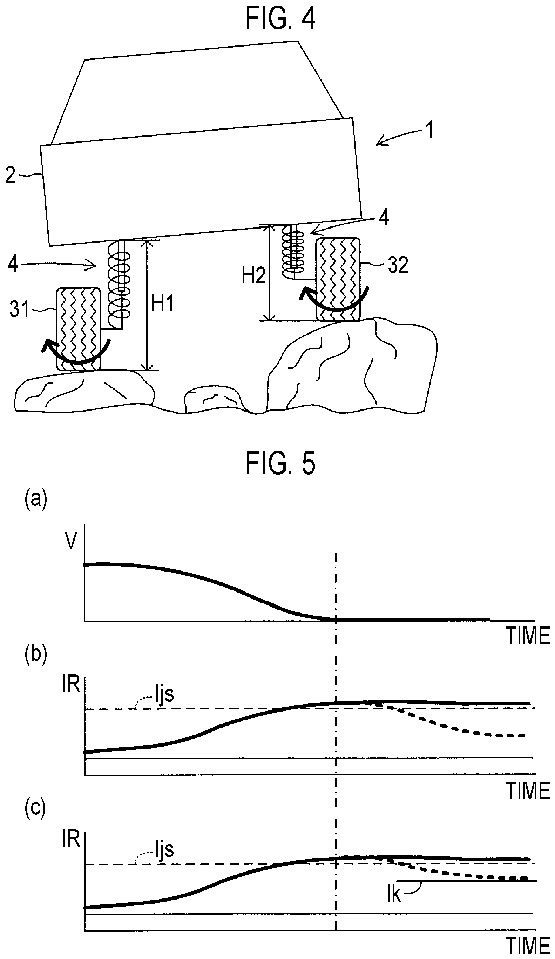

In step S12, the ECU 11 determines whether or not the vehicle 1 is in the predetermined situation, that is, the situation where the obstacle that can change the turning operations of the right front wheel 31 and the left front wheel 32 by applying the disturbance to the right front wheel 31 and the left front wheel 32 is present, based on the traveling environment information Je acquired from the traveling environment detection unit 12. Here, as the "predetermined situation", for example, a situation where the vehicle 1 travels on an uneven road can be described. In a situation where the vehicle 1 travels on the uneven road, as the "obstacle", for example, a large rock present on the road surface can be described as shown in FIG. 4.

For the vehicle height H1 on the right front wheel 31 side and the vehicle height H2 on the left front wheel 32 side included in the traveling environment information Je, as shown in FIG. 4, the ECU 11 determines whether or not a deviation (or an absolute value of a difference) between the vehicle height H1 and the vehicle height H2 is larger than a right-and-left wheel deviation threshold value Hs set in advance. Then, in a case where the deviation between the vehicle height H1 and the vehicle height H2 is larger than the right-and-left wheel deviation threshold value Hs, the vehicle 1 is in the situation where the vehicle 1 travels on the uneven road, and thus the ECU 11 determines "Yes".

Here, as shown in FIG. 4, a case where the right front wheel 31 and the left front wheel 32 that are the turning wheels ride on the obstacles (rocks or the like) having different heights is assumed. In this case, the deviation between the vehicle height H1 and the vehicle height H2 is increased, and the vehicle body 2 is inclined. In this situation, for example, due to the influence of the gravity acting as the disturbance, the left front wheel 32 on the higher rock side is easily revolved to the lower side in accordance with the inclination of the vehicle body 2, as shown by a thick solid arrow in FIG. 4. In the first embodiment, since the right front wheel 31 and the left front wheel 32 are connected via the turning actuator, a force for revolving the right front wheel 31 on the lower rock side in the same direction as the left front wheel 32 acts.

By the way, in a case where the left front wheel 32 is revolved in the direction of the arrow due to the disturbance, the left front wheel 32 may roll down from the higher rock. In this case, for example, the higher rock is located between the left front wheel 32 and the left rear wheel 34 to be the obstacle, and the vehicle 1 may be stuck such that the vehicle 1 cannot be moved forward or backward. Therefore, in the vehicle 1 that travels on the uneven road, it is significant that the right front wheel 31 and the left front wheel 32 that are the turning wheels are not revolved (not turned) by the disturbance until the vehicle 1 is brought into the stable situation where the vehicle 1 is stably stopped.

Therefore, in subsequent step S13, the ECU 11 temporarily interrupts the execution of the protection control on the turning ECU 54. That is, for example, the ECU 11 temporarily interrupts the execution of the protection control via the turning ECU 54 even in a situation where the turning torque Ts needed to maintain the turning operation (turning state) of the right front wheel 31 and the left front wheel 32 to resist the disturbance is large, in other words, the turning current I supplied to the turning motor 526 is large, and the temperature rise due to the heat generation of the turning motor 526 or the like may occur. As a result, the turning ECU 54 does not execute the protection control until the vehicle 1 escapes to the stable situation from the predetermined situation where the vehicle 1 travels on the uneven road. Then, in a case where the execution of the protection control is temporarily stopped, the ECU 11 executes the step process of step S15.

On the other hand, in a case where the deviation (or the absolute value of the difference) between the vehicle height H1 and the vehicle height H2 is equal to or smaller than the right-and-left wheel deviation threshold value Hs set in advance, the vehicle 1 is in the stable situation where the vehicle 1 is not traveling on the uneven road, and thus the ECU 11 determines "No". Then, the ECU 11 executes the step process of step S14.

In a case where the range signal LS is acquired from the transfer switch 84 or the differential lock signal DS is acquired from the differential lock switch 85, the vehicle 1 is in the situation where the vehicle 1 travels on the uneven road, and thus the ECU 11 determines "Yes". Then, in subsequent step S13, the ECU 11 temporarily stops the execution of the protection control on the turning ECU 54. As a result, the turning ECU 54 does not execute the protection control until the vehicle 1 escapes from the situation where the vehicle 1 travels on the uneven road. Then, in a case where the execution of the protection control is temporarily stopped, the ECU 11 executes the step process of step S15.

In a case where the range signal LS is not acquired from the transfer switch 84 and the differential lock signal DS is not acquired from the differential lock switch 85, the vehicle 1 is in the situation where the vehicle 1 is not traveling on the uneven road, and thus the ECU 11 determines "No". Then, the ECU 11 executes the step process of step S14.

Further, regarding the turning current I acquired from the current sensor 528, in a case where the turning current I supplied to the turning motor 526 to control the turning operations of the right front wheel 31 and the left front wheel 32 is larger than the upper limit value Ijs, the vehicle 1 is in the situation where the vehicle 1 travels on the uneven road as the predetermined situation, and thus the ECU 11 determines "Yes". Then, in subsequent step S13, the ECU 11 temporarily interrupts the execution of the protection control on the turning ECU 54. As a result, the turning ECU 54 does not execute the protection control until the vehicle 1 escapes to the stable situation from the predetermined situation where the vehicle 1 travels on the uneven road. That is, as shown in (b) in FIG. 5, the turning ECU 54 does not execute the protection control of cutting off the turning current I even when the turning current I is larger than the upper limit value Ijs.

Then, in a case where the execution of the protection control is temporarily stopped, the ECU 11 executes the step process of step S15. When a predetermined time elapses after the vehicle speed V reaches "0", that is, in a case where the stable situation can be determined, as shown in (a) in FIG. 5, the turning ECU 54 can decrease the turning current I as shown by a broken line in (b) in FIG. 5.

In step S13, the ECU 11 causes the turning ECU 54 to execute the protection control by setting the lower limit value Ik to restrict the decrease amount of the turning current I when the turning current I is decreased by the protection control to be lower than the upper limit value Ijs, as shown in (c) in FIG. 5. As a result, the turning ECU 54 sets the lower limit value Ik, and executes the protection control to decrease the turning current I to the lower limit value Ik smaller than the upper limit value Ij s.

For example, the turning ECU 54 sets the lower limit value Ik based on the turning current I that generates the turning torque Ts of an extent to resist the disturbance assumed when the vehicle 1 travels on the uneven road, that is, the extent that the states of the wheels 3 are not changed due to the disturbance. Then, in a case where the protection control is executed by suppressing the restriction of the normal protection control, the ECU 11 executes the step process of step S15.

On the other hand, in a case where the turning current I is equal to or smaller than the upper limit value Ijs, the vehicle 1 is in the situation where the vehicle 1 is not traveling on the uneven road, the ECU 11 determines "No". Then, the ECU 11 executes the step process of step S14.

In step S14, since the vehicle 1 is in a situation where the vehicle 1 travels on a good road that is not the uneven road, the ECU 11 can execute the normal protection control. In addition, in step S14, since the situation is changed from the predetermined situation where the vehicle 1 travels on the uneven road to the stable situation where the vehicle 1 travels on the good road, the ECU 11 can restore and execute the normal protection control. As a result, the turning ECU 54 can execute the normal protection control in a case where the turning current I is increased with respect to the upper limit value Ij s.

In step S12, the ECU 11 can also determine the situation where the vehicle 1 travels on the uneven road, that is, the predetermined situation by appropriately combining the three determinations described above. For example, in a case where the deviation between the vehicle height H1 and the vehicle height H2 is larger than the right-and-left wheel deviation threshold value Hs and the turning current I is larger than the upper limit value Ijs, the vehicle 1 is in the situation where the vehicle 1 travels on the uneven road as the predetermined situation, and thus the ECU 11 can determine "Yes". In a case where the range signal LS is acquired from the transfer switch 84 or the differential lock signal DS is acquired from the differential lock switch 85, and the turning current I is larger than the upper limit value Ij s, the vehicle 1 is in the situation where the vehicle 1 travels on the uneven road as the predetermined situation, and thus the ECU 11 can determine "Yes".

In addition, in a case where the deviation between the vehicle height H1 and the vehicle height H2 is larger than the right-and-left wheel deviation threshold value Hs, and the range signal LS is acquired from the transfer switch 84 or the differential lock signal DS is acquired from the differential lock switch 85, the vehicle 1 is in the situation where the vehicle 1 travels on the uneven road as the predetermined situation, and thus the ECU 11 can determine "Yes". Further, in a case where the deviation between the vehicle height H1 and the vehicle height H2 is larger than the right-and-left wheel deviation threshold value Hs, the range signal LS is acquired from the transfer switch 84 or the differential lock signal DS is acquired from the differential lock switch 85, and the turning current I is larger than the upper limit value Ijs, the vehicle 1 is in the situation where the vehicle 1 travels on the uneven road as the predetermined situation, and thus the ECU 11 can determine "Yes".

In step S15, the ECU 11 determines whether or not an off operation of switching, for example, an ignition switch or the like described above (hereinafter, simply referred to as an "I/G or the like") to an off state is performed as the cutoff operation of cutting off the supply of the turning current I to the turning motor 526. That is, in a case where the off operation of the I/G or the like is performed by the driver, the ECU 11 determines "Yes" and executes the step process of step S16. On the other hand, when the off operation of the I/G or the like is not performed by the driver, that is, when an on state of the I/G or the like is maintained such that the supply of the turning current I to the turning motor 526 is not cut off, the ECU 11 determines "No", and executes each step process after step S11 again.

In step S16, the ECU 11 determines whether or not the turning current I is equal to or smaller than the upper limit value Ijs. That is, in step S16, the ECU 11 determines whether or not the turning current I is equal to or smaller than the upper limit value Ijs in a state where a determination is made in step S15 that the off operation of the I/G or the like is performed.

Specifically, in step S16, in a case where the turning current I is equal to or smaller than the upper limit value Ijs, the ECU 11 determines "Yes" and executes the step process of step S17. That is, in this case, the ECU 11 determines that at least the turning motor 526 is not in a situation where the turning operation (turning state) of the wheels 3 is maintained to resist the disturbance input from the road surface of the uneven road or the obstacle, based on the fact that the turning current I is equal to or smaller than the upper limit value Ijs. In other words, the ECU 11 determines that the operation of the wheel 3 is less likely to be changed unintentionally due to the disturbance and the vehicle 1 is in the stable situation where the vehicle 1 is stably stopped, and the vehicle 1 is less likely to be in a traveling disable state, such as being stuck. Therefore, in this case, the ECU 11 determines that the off operation of the I/G or the like that is the cutoff operation of cutting off the supply of the turning current I to the turning motor 526 is received.

In step S17, the ECU 11 permits various electronic control units mounted in the vehicle 1, including the operation ECU 53 and the turning ECU 54, to execute the cutoff process, that is, to switch the I/G or the like from the on state to the off state in accordance with the off operation of the I/G or the like by the driver. As a result, each electronic control unit executes predetermined cutoff process in a case where the I/G or the like is switched to the off state. Therefore, the operation ECU 53 cuts off the supply of the current to the reaction force motor 515, and the turning ECU 54 cuts off the supply of the turning current I to the turning motor 526.

In a case where the off operation of the I/G or the like by the driver is received in step S17, the ECU 11 temporarily ends the execution of the control program in step S19. When a predetermined short time elapses, the ECU 11 starts the execution of the control program again in step S10.

On the other hand, in step S16, when the turning current I is not equal to or smaller than the upper limit value Ijs, the ECU 11 determines "No" and executes the step process of step S18. That is, in this case, the ECU 11 determines that the turning motor 526 is still in the predetermined situation where the turning operations (turning states) of the wheels 3 are maintained to resist the disturbance input from the road surface of the uneven road or the obstacle, based on the fact that the turning current I is not equal to or smaller than the upper limit value Ijs. In other words, the ECU 11 determines that the operation of the wheel 3 is more likely to be changed unintentionally due to the disturbance, and as a result, the vehicle 1 is not stably stopped, and the vehicle 1 is more likely to be in the traveling disable state, such as being stuck. Therefore, in this case, the ECU 11 determines that the off operation of the I/G or the like that is the cutoff operation of cutting off the supply of the turning current I to the turning motor 526 is not received.

In step S18, the ECU 11 notifies the driver or the passenger that the off operation of the I/G or the like by the driver is not received. Specifically, the ECU 11 or the like displays a message, such as "Please operate the ignition switch after moving the vehicle to a safe place", a graphic, or the like on the display device 13. In addition, in a case where the notification is issued, the notification can be issued by voice using a speaker or the like provided in the vehicle 1 instead of or in addition to displaying on the display device 13. Then, in a case where the notification is issued to the driver or the passenger, the ECU 11 temporarily ends the execution of the control program in step S19. When the predetermined short time elapses, the ECU 11 starts the execution of the control program again in step S10.

As can be understood from the above description, the vehicle control device 10 according to the first embodiment is applied to the vehicle 1 including the turning motor 526 as the electric motor that controls the turning operation that is the operation of the wheels 3, that is, the right front wheel 31 and the left front wheel 32. The vehicle control device 10 includes the acquisition unit 111 that acquires the traveling environment information Je representing the traveling environment of the vehicle 1, the situation determination unit 112 that determines whether or not the predetermined situation where the disturbance acts on the right front wheel 31 and the left front wheel 32 such that the turning operation is changed has occurred, based on the traveling environment information Je, and the suppression unit 113 that suppresses the restriction of the protection control of protecting the turning motor 526 by restricting the turning current I supplied to the turning motor 526 in a case where the predetermined situation has occurred.

In this case, the vehicle control device 10 further includes the cutoff operation determination unit 114 that determines the presence or absence of the cutoff operation of cutting off the supply of the turning current I in the predetermined situation, the situation change determination unit 115 that determines whether or not the predetermined situation is changed to the stable situation where the operations of the right front wheel 31 and the left front wheel 32 are not changed, in a case where the cutoff operation is performed, and the permission unit 116 that permits the execution of the cutoff process in accordance with the cutoff operation, in a case where the predetermined situation is changed to the stable situation. In this case, the vehicle control device 10 further includes the notification unit 117 that notifies, in a case where the cutoff operation is performed and the predetermined situation is not changed to the stable situation, that the cutoff process is not executable.

In addition, in this case, the predetermined situation is a situation where the obstacle capable of changing the operations of the right front wheel 31 and the left front wheel 32 by applying the disturbance to the right front wheel 31 and the left front wheel 32 is present.

In this case, the predetermined situation is the situation where the vehicle 1 travels on the uneven road.

In addition, in this case, in the vehicle control device 10, the suppression unit 113 suppresses the restriction by temporarily interrupting execution of the protection control.

In addition, in this case, in the vehicle control device 10, the suppression unit 113 suppresses the restriction such that the decrease amount in a case where the turning current I is decreased in the protection control is smaller than the decrease amount in a case where the predetermined situation has not occurred.

In addition, in this case, in the vehicle control device 10, the suppression unit 113 suppresses the restriction such that the lower limit value Ik in a case where the turning current I is decreased in the protection control is larger than the lower limit value Ik in a case where the predetermined situation has not occurred.

In addition, in this case, in the vehicle control device 10, the situation determination unit 112 determines that the predetermined situation has occurred in a case where the deviation between the vehicle height H1 and the vehicle height H2 of the right front wheel 31 and the left front wheel 32 is larger than the right-and-left wheel deviation threshold value Hs set in advance.

In addition, in this case, in the vehicle control device 10, the situation determination unit 112 determines that the predetermined situation has occurred in a case where the center differential 81 as the transfer case mounted in the vehicle 1 is set to the LOW range representing the low speed or in a case where the differential gear 8 mounted in the vehicle 1 is set to the differential lock representing the lock.

In addition, in this case, in the vehicle control device 10, the situation determination unit 112 determines that the predetermined situation has occurred in a case where the magnitude of the turning current I supplied to the turning motor 526 to control the turning operation is larger than the magnitude of the upper limit value Ijs set in advance.

In this case, the vehicle control device 10 further includes the restore command unit 118 that restores the restriction of the protection control suppressed by the suppression unit 113 in the predetermined situation to the restriction of the protection control before being suppressed by the suppression unit 113 in the predetermined situation, in a case where the predetermined situation is changed to the stable situation where the operation of the right front wheel 31 and the left front wheel 32 is not changed, based on the traveling environment information Je representing the traveling environment.

With the vehicle control device 10, the suppression unit 113 can suppress the restriction of the protection control of protecting the turning motor 526 in a case where the vehicle 1 is in the predetermined situation where the disturbance acts such that the turning operations of the right front wheel 31 and the left front wheel 32 are changed. As a result, in a case where the vehicle 1 is in the predetermined situation, the turning current I with the restriction suppressed can be supplied to the turning motor 526, and the turning motor 526 can generate a force (torque) to resist the disturbance acting on the right front wheel 31 and the left front wheel 32. Therefore, in the predetermined situation, the influence of the disturbance on the turning operations of the right front wheel 31 and the left front wheel 32 can be reduced.

The turning motor 526 is provided in the steering system 5. The steering system 5 according to the first embodiment is a steer-by-wire type steering system including the operation device 51 including the steering wheel 511 as the operation member operated by the driver, the turning device 52 including the turning motor 526 and turning the right front wheel 31 and the left front wheel 32, and the operation ECU 53 and the turning ECU 54 that are the controllers configured to control the turning current I supplied to the turning motor 526 to realize the turning of the right front wheel 31 and the left front wheel 32 in accordance with the operation of the steering wheel 511 via the turning device 52.

B. Second Embodiment

1. Configuration of Vehicle 1 to Which Vehicle Control Device 10 is Applied

In a second embodiment, the vehicle control device 10 is applied to the vehicle 1 shown in FIG. 6. In the vehicle 1 according to the second embodiment, the steering system 5 includes a wheel turning device 58 that can independently turn each of the right front wheel 31 and the left front wheel 32 that are the turning wheels, instead of the turning device 52 according to the first embodiment. Specifically, in the second embodiment, each wheel turning device 58 is incorporated in a wheel disposition module 200.

Here, in the second embodiment, instead of the turning device 52, a pair of wheel turning devices 58 are disposed respectively corresponding to the right front wheel 31 and the left front wheel 32 that are turning wheels. Therefore, as shown in FIG. 6, in order to control the wheel turning devices 58 independently of each other, the turning ECU 54 according to the first embodiment includes a turning ECU 541 that controls the wheel turning device 58 disposed on the right front wheel 31 and a turning ECU 542 that controls the wheel turning device 58 disposed on the left front wheel 32. The turning ECU 541 and the turning ECU 542 are configured to execute the normal protection control, similarly to the turning ECU 54. In FIG. 6, the turning ECU 541 is shown as "S-ECU 541", and the turning ECU 542 is shown as "S-ECU 542".

Further, in the second embodiment, since the wheel turning device 58 is provided instead of the turning device 52, the motor rotation angle sensor 527, the current sensor 528, and the turning angle sensor 529 according to the first embodiment are shown as a motor rotation angle sensor 587, a current sensor 588, and a turning angle sensor 589, respectively, as shown in FIG. 6. Further, the temperature sensor 55 that detects the motor temperature Tm according to the first embodiment is shown as a temperature sensor 59. The motor rotation angle sensor 587, the current sensor 588, the turning angle sensor 589, and the temperature sensor 59 detect the physical quantities of the target in the same manner as the motor rotation angle sensor 527, the current sensor 528, the turning angle sensor 529, and the temperature sensor 55 according to the first embodiment.

In the second embodiment as well, the steering system 5 that is the control target of the vehicle control device 10 is a steer-by-wire type steering system including the operation device 51 and the wheel turning devices 58 that are mechanically independent of each other. Here, in the steering system 5 including the wheel turning devices 58, the operation ECU 53 that controls the operation device 51 is in charge of a pair of the turning ECU 541 and the turning ECU 542 for controlling the wheel turning devices 58, respectively.

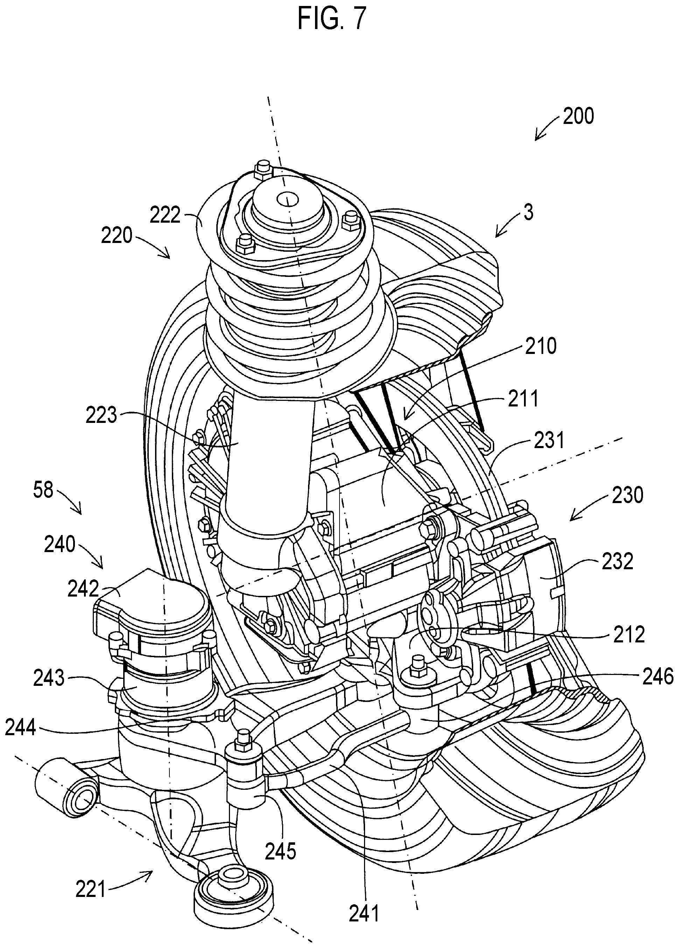

As shown in FIG. 7, the wheel disposition module 200 includes a wheel drive unit 210 as a drive system. The wheel drive unit 210 includes a housing 211, an electric motor as a drive source and a reducer that decelerates the rotation of the electric motor (both not shown) that are built in the housing 211, and an axle hub (hidden and not visible in FIG. 6) to which a wheel that constitutes the wheel 3 is attached. The wheel drive unit 210 is disposed inside a rim of the wheel that constitutes the wheel 3, and is a so-called in-wheel motor unit. Since the wheel drive unit 210, that is, the in-wheel motor unit has a well-known structure, the description of the structure is omitted.

The wheel disposition module 200 includes a suspension unit 220. In the suspension unit 220, the housing 211 of the wheel drive unit 210 functions as a carrier that rotatably supports the wheels 3 and as a steering knuckle in the wheel turning device 58 described below, and vertical movement thereof with respect to the vehicle body 2 is allowed. Therefore, the suspension unit 220 includes a lower arm 221 that is a suspension arm, the housing 211 of the wheel drive unit 210, a coil spring 222, and a hydraulic shock absorber 223.

The wheel disposition module 200 includes a brake unit 230 as a brake system. The brake unit 230 includes a disc rotor 231 attached to the axle hub together with the wheel that constitutes the wheel 3 and rotating together with the wheel 3, and a brake caliper 232 that holds the housing 211 of the wheel drive unit 210 to straddle the disc rotor 231. In the second embodiment, the brake caliper 232 includes an electric motor that generates a pressing force for pressing the brake pad as a friction member against the disc rotor 231. That is, the brake unit 230 according to the second embodiment is an electric brake unit that generates a braking force depending on a force generated by the electric motor.

The wheel disposition module 200 further includes the wheel turning device 58. The wheel turning device 58 is a single wheel independent turning device that turns solely one (for example, the right front wheel 31) of the pair of the right front wheel 31 and the left front wheel 32 independently of the other (for example, the left front wheel 32). The wheel turning device 58 includes the housing 211 of the wheel drive unit 210 that functions as the steering knuckle, a turning actuator 240 disposed on the lower arm 221 at a position near a base end portion of the lower arm 221 of the suspension unit 220, and a tie rod 241 that connects the turning actuator 240 and the housing 211 (steering knuckle).

Here, the turning actuator 240 includes a turning motor 242 that is the electric motor, a reducer 243 that decelerates the rotation of the turning motor 242, and an actuator arm 244 that is revolved by the rotation of the turning motor 242 via the reducer 243 and functions as a pitman arm.

A base end portion of the tie rod 241 is connected to the actuator arm 244 via a ball joint 245. A distal end portion of the tie rod 241 is connected to a knuckle arm 212 of the housing 211 (steering knuckle) via a ball joint 246.

The turning control of the wheel turning device 58 incorporated in each of a pair of the wheel disposition modules 200 is control of turning each of the right front wheel 31 and the left front wheel 32 that are the turning wheels, to the turning angle $\theta$ in accordance with the turning request. Also in the steering system 5 including the wheel turning device 58, the operation ECU 53 acquires the operation angle $\delta$ and decides the target turning angles $\theta d$ of the right front wheel 31 and the left front wheel 32 according to the expression (1), in the same manner as the steering system 5 including the turning device 52 according to the first embodiment.

Then, each of the turning ECU 541 and the turning ECU 542 decides the target motor rotation angle vd that is the target of the motor rotation angle v of the turning motor 242 based on the target turning angle $\theta d$, as in the turning ECU 54 according to the first embodiment. The turning ECU 541 and the turning ECU 542 detect the actual motor rotation angle v of the turning motor 526 via the motor rotation angle sensor 527, and decide the motor rotation angle deviation $\Delta v$ that is the deviation of the motor rotation angle v with respect to the target motor rotation angle vd according to the expression (2).

The turning ECU 541 and the turning ECU 542 decide the turning torque Ts to be generated by the turning motor 242 according to the feedback control rule based on the motor rotation angle deviation $\Delta v$, as in the turning ECU 54 according to the first embodiment. That is, the turning ECU 541 and the turning ECU 542 also decide the turning torque Ts according to the expression (3).

Further, as in the turning ECU 54 according to the first embodiment, the turning ECU 541 and the turning ECU 542 provide the upper limit value Ijs with respect to the turning current I supplied to the turning motor 242 in accordance with the traveling environment of the vehicle 1, and basically prohibit the supply of the turning current I exceeding the upper limit value Ijs. The turning ECU 541 and the turning ECU 542 can execute the protection control of setting the supplied turning current I to be equal to or smaller than the upper limit value Ijs when the turning current I decided in accordance with the turning torque Ts calculated according to the expression (3) exceeds the upper limit value Ijs. In a case where the turning ECU 541 and the turning ECU 542 execute the protection control in the second embodiment, the motor temperature Tm, which is the temperature of the turning motor 242, is detected by the temperature sensor 59.

Here, in the second embodiment, a case where the wheel disposition module 200 is disposed on each of the right front wheel 31 and the left front wheel 32 of the vehicle 1 will be described as an example. However, the wheel disposition module 200 may also be disposed on each of the right rear wheel 33 and the left rear wheel 34 of the vehicle 1, as needed. That is, in this case, in the vehicle 1, the right front wheel 31, the left front wheel 32, the right rear wheel 33, and the left rear wheel 34 are driven and turned. In this case, in order to control the wheel turning devices 58 of the wheel disposition modules 200 disposed on the right rear wheel 33 and the left rear wheel 34, the corresponding turning ECU is provided, and each turning ECU also controls the corresponding wheel turning device 58 as in the turning ECU 541 and the turning ECU 542.

In the second embodiment, a case where the wheel disposition module 200 includes the wheel drive unit 210 (in-wheel motor unit) as the drive system and the brake unit 230 (electric brake unit) as the brake system will be described as an example. However, the wheel drive unit 210 can be omitted from the wheel disposition module 200 or the brake unit 230 can be omitted from the wheel disposition module 200, as needed. That is, in this case, the wheel disposition module 200 includes the suspension unit 220 and the wheel turning device 58 that constitutes the steering system 5.

In a case where the wheel drive unit 210 is omitted from the wheel disposition module 200, the vehicle 1 can include, for example, the engine 6, the transmission 7, and the differential gear 8, as in the first embodiment. As a result, the vehicle 1 can travel by the drive force being applied to the wheels 3. In a case where the brake unit 230 is omitted from the wheel disposition module 200, the vehicle 1 can include, for example, the right front wheel brake 91 and the left front wheel brake 92 as in the first embodiment. As a result, the vehicle 1 can be stopped by the braking force being applied to the wheels 3.

2. Description of Process of Vehicle Control Device 10

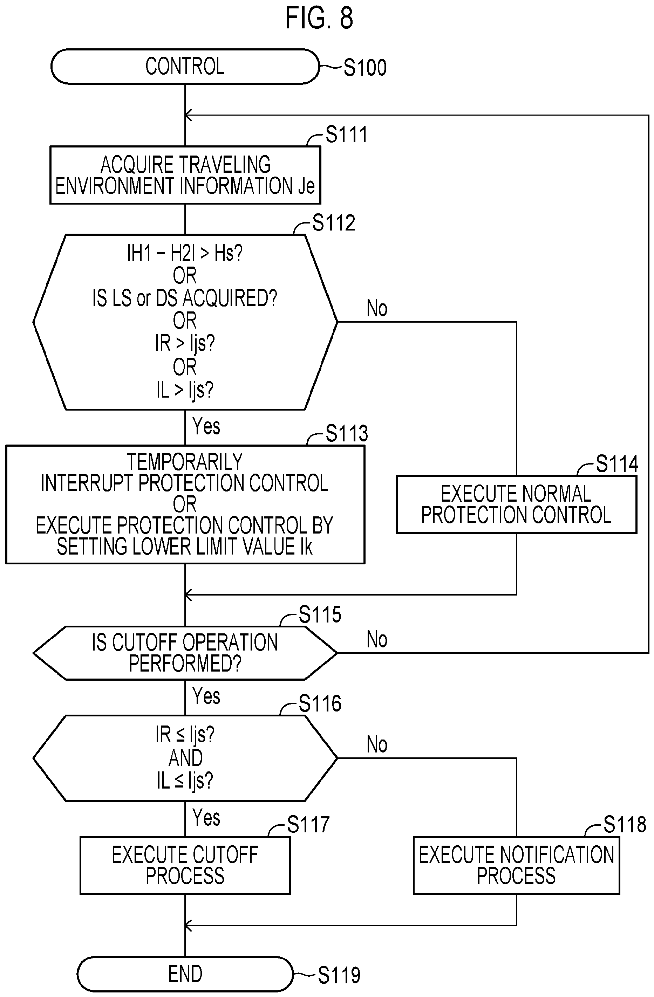

In the second embodiment, the ECU 11 of the vehicle control device 10 executes a control program shown in a flowchart of FIG. 8. In the control program executed by the ECU 11 in the second embodiment, the process restrictions of step S12 and step S16 in the control program executed by the ECU 11 in the first embodiment are mainly changed. Therefore, in the following description, the "control program" according to the second embodiment is shown in FIG. 8 by adding "100" to each step number of the "control program" according to the first embodiment. Then, the process that is substantially changed in the second embodiment will be described in detail by omitting the detailed description of the substantially same step process.

In the second embodiment, the ECU 11 starts the execution of the control program in step S100, and acquires the traveling environment information Je in subsequent step S111. Then, the ECU 11 executes step process of subsequent step S112.

In step S112, the comparison process of comparing the turning current I supplied to the turning motor 526 and the upper limit value Ijs shown in step S12 of the control program according to the first embodiment is omitted. In step S112, a comparison process between the turning current IR supplied to the turning motor 242 disposed on the right side (right front wheel 31 (or right rear wheel 33)) of the vehicle 1 and the upper limit value Ijs and a comparison process between the turning current II, supplied to the turning motor 242 disposed on the left side (left front wheel 32 (or left rear wheel 34)) of the vehicle 1 and the upper limit value Ijs are newly added.

As a result, in step S112, in a case where the turning current IR acquired from the current sensor 528 disposed on the right front wheel 31 is larger than the upper limit value Ijs, the vehicle 1 is in the situation where the vehicle 1 travels on the uneven road as the predetermined situation, and thus the ECU 11 determines "Yes". Then, in subsequent step S113, the ECU 11 causes the turning ECU 541 to temporarily interrupt the execution of the protection control or to execute the protection control by setting the lower limit value Ik. As a result, the turning ECU 541 does not execute the normal protection control until the vehicle 1 escapes to the stable situation from the predetermined situation where the vehicle 1 travels on the uneven road.

In addition, in a case where the acquired turning current I is equal to or smaller than the upper limit value Ijs, the vehicle 1 is in the situation where the vehicle 1 is not traveling on the uneven road, and thus the ECU 11 determines "No". Then, in subsequent step S114, since the vehicle 1 is in the situation where the vehicle 1 travels on the good road that is not the uneven road, the ECU 11 can execute the normal protection control. In addition, in step S114, since the situation is changed from the predetermined situation where the vehicle travels on the uneven road to the stable situation where the vehicle travels on the good road, the ECU 11 can restore and execute the normal protection control. As a result, the turning ECU 541 can execute the normal protection control in a case where the turning current IR is increased with respect to the upper limit value Ijs.

In addition, in step S112, in a case where the turning current IL acquired from the current sensor 528 disposed on the left front wheel 32 is larger than the upper limit value Ijs, the vehicle 1 is in the situation where the vehicle 1 travels on the uneven road as the predetermined situation, and thus "Yes" is determined. Then, in subsequent step S113, the ECU 11 causes the turning ECU 542 to temporarily interrupt the execution of the protection control or to execute the protection control by setting the lower limit value Ik. As a result, the turning ECU 542 does not execute the normal protection control until the vehicle 1 escapes to the stable situation from the predetermined situation where the vehicle 1 travels on the uneven road.

In addition, in a case where the acquired turning current IL is equal to or smaller than the upper limit value Ijs, the vehicle 1 is in the situation where the vehicle 1 is not traveling on the uneven road, and thus the ECU 11 determines "No". Then, in subsequent step S114, since the vehicle 1 is in the situation where the vehicle 1 travels on the good road that is not the uneven road, the ECU 11 can execute the normal protection control. In addition, in step S114, since the situation is changed from the predetermined situation where the vehicle travels on the uneven road to the stable situation where the vehicle travels on the good road, the ECU 11 can restore and execute the normal protection control. As a result, the turning ECU 542 can execute the normal protection control in a case where the turning current IL is increased with respect to the upper limit value Ijs.

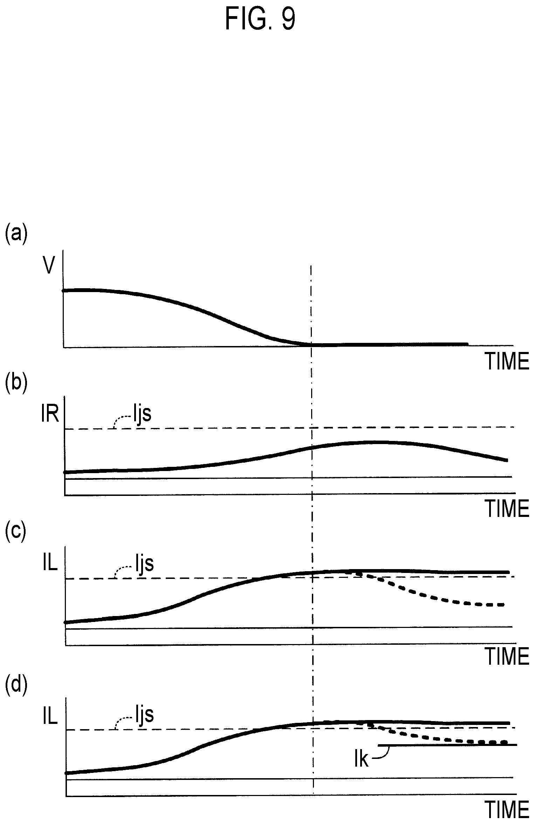

Here, in the second embodiment, the turning motor 242 is disposed on each of the right front wheel 31 and the left front wheel 32. Therefore, as shown in (b) in FIG. 9, for example, the turning current IR supplied to the turning motor 242 of the right front wheel 31 may not be larger than the upper limit value Ijs, and as shown in (c) and (d) in FIG. 9, for example, the turning current IL supplied to the turning motor 242 of the left front wheel 32 may be larger than the upper limit value Ijs. In this case, the turning ECU 541 that controls the turning motor 242 on the right front wheel 31 side does not execute any protection control including the normal protection control.

On the other hand, as shown in (b) in FIG. 9, the turning ECU 542 that controls the turning motor 242 on the left front wheel 32 side suppresses the restriction of the protection control of interrupting the turning current I and does not execute the protection control even in a case where the turning current IR is larger than the upper limit value Ijs. The turning ECU 54 can decrease the turning current I as shown by a broken line in (b) in FIG. 9 when the predetermined time elapses after the vehicle speed V reaches "0" as shown in (a) in FIG. 9.

In a case where the protection control is executed, the turning ECU 542 temporarily suppresses the restriction of the normal protection control, specifically, sets the lower limit value Ik, and executes the protection control with the restriction suppressed to decrease the turning current IR to the lower limit value Ik smaller than the upper limit value Ijs. The lower limit value Ik decided by the turning ECU 542 in the second embodiment is also set, for example, based on the turning current IR that generates the turning torque Ts of an extent to resist the disturbance assumed when the vehicle 1 travels on the uneven road, that is, the extent that the states of the wheels 3 are not changed due to the disturbance.

In the vehicle 1 according to the second embodiment, the transfer switch 84 and the differential lock switch 85 are not provided. Therefore, in step S112, the ECU 11 omits the determination of whether or not the range signal LS is acquired from the transfer switch 84 or the differential lock signal DS is acquired from the differential lock switch 85. However, as described above, in a case where the wheel drive unit 210 is omitted from the wheel disposition module 200 and the differential gear 8 is mounted in the vehicle 1, the ECU 11 determines whether or not the range signal LS is acquired from the transfer switch 84 or the differential lock signal DS is acquired from the differential lock switch 85, as in step S12 in the first embodiment.

After the step process of step S113 or step S114, the ECU 11 determines whether or not the cutoff operation is performed in step S115, and executes the step process of step S116 in a case where the cutoff operation is performed.

In step S116, the ECU 11 determines whether or not the turning current IR is equal to or smaller than the upper limit value Ijs and whether or not the turning current IL is equal to or smaller than the upper limit value Ijs. That is, also in step S116, the ECU 11 determines whether or not the turning current IR and the turning current IL are equal to or smaller than the upper limit value Ijs in a state where a determination is made in step S115 that the cutoff operation is performed.

Specifically, in step S116, when the turning current IR and the turning current IL are equal to or smaller than the upper limit value Ijs, the ECU 11 determines "Yes" and executes the step process of step S117. On the other hand, in step S116, in a case where the turning current IR or the turning current II, is larger than the upper limit value Ijs, the ECU 11 determines "No" and executes the step process of step S118. Then, in step S119, the ECU 11 temporarily ends the execution of the control program, and when the predetermined short time elapses, the ECU 11 starts the execution of the control program again in step S10.

As can be understood from the above description, the steering system 5 according to the second embodiment is a steer-by-wire type steering system including the operation device 51 including the steering wheel 511 operated by the driver, the wheel turning devices 58 as the turning devices that turn the right front wheel 31 and the left front wheel 32 (and the right rear wheel 33 and the left rear wheel 34) of the vehicle 1, respectively, and the turning ECU 541 and the turning ECU 542 that are controller that control the turning current IR and the turning current IL supplied to the turning motors 242 of the wheel turning devices 58, to realize the turning of each of the right front wheel 31 and the left front wheel 32 (and the right rear wheel 33 and the left rear wheel 34) in accordance with the operation of the steering wheel 511 by each of the wheel turning devices 58. In the second embodiment as well, the same effects as the effects of the first embodiment can be obtained.

C. Modification Example

In the first embodiment and the second embodiment, as the electric motor that is the control target of the vehicle control device 10, among the drive system (for example, the wheel drive unit 210) that drives the wheels 3, the brake system (for example, the brake unit 230) that brakes the wheels 3, and the steering system 5 that turns the wheels 3, the turning motor 526 and the turning motor 242 provided in at least the steering system 5 have been described as examples. The vehicle control device can use, as the control target, the electric motor on which the protection control is executed.

Specifically, for example, an in-wheel motor that constitutes the drive system (wheel drive unit 210), a motor for traveling mounted in an electric vehicle (EV), an electric motor provided in an electric caliper that constitutes a brake system (brake unit 230), the reaction force motor 515 that constitutes the steering system 5, or an electric motor (EPS motor) that constitutes an electric power steering device can be the control targets of the vehicle control device. For example, for the electric motors, the protection control may be executed when traveling on the uneven road, and the electric motors may be the control targets of the vehicle control device.

In the first embodiment and the second embodiment, a case where the operation device 51 is operated by the driver has been described as an example. That is, a case where the vehicle control device 10 is applied to the vehicle 1 that travels via the manual driving by the driver has been described as an example. Alternatively, the vehicle control device 10 can be applied to the vehicle 1 that travels via autonomous driving. In this case as well, even though there is a difference between the manual driving and the autonomous driving, the predetermined situation may occur in the traveling environment of the vehicle 1, and thus the vehicle control device 10 can control the turning motor 526 and the turning motor 242 that are the electric motors, as in the first embodiment and the second embodiment. Therefore, in this case as well, the same effects as the effects of the first embodiment and the second embodiment can be obtained.

Here, a first aspect of the present disclosure relates to a vehicle control device applied to a vehicle including an electric motor configured to control an operation of a wheel, the vehicle control device including an acquisition unit configured to acquire traveling environment information representing a traveling environment of the vehicle, a situation determination unit configured to determine whether or not a predetermined situation where a disturbance acts on the wheel such that the operation is changed has occurred, based on the traveling environment information, and a suppression unit configured to suppress restriction of protection control of protecting the electric motor by restricting a current supplied to the electric motor, in a case where the predetermined situation has occurred.

A second aspect of the present disclosure relates to the vehicle control device according to the first aspect, further including a cutoff operation determination unit configured to determine presence or absence of a cutoff operation of cutting off supply of the current in the predetermined situation, a situation change determination unit configured to determine whether or not the predetermined situation is changed to a stable situation where the operation is not changed, in a case where the cutoff operation is performed, and a permission unit configured to permit execution of a cutoff process in accordance with the cutoff operation, in a case where the predetermined situation is changed to the stable situation.

A third aspect of the present disclosure relates to the vehicle control device according to the second aspect, further including a notification unit configured to notify, in a case where the cutoff operation is performed and the predetermined situation is not changed to the stable situation, that the cutoff process is not executable.

A fourth aspect of the present disclosure relates to the vehicle control device according to any one of the first to third aspects, in which the predetermined situation is a situation where an obstacle capable of changing the operation by applying the disturbance to the wheel is present.

A fifth aspect of the present disclosure relates to the vehicle control device according to any one of the first to third aspects, in which the predetermined situation is a situation where the vehicle travels on an uneven road.

A sixth aspect of the present disclosure relates to the vehicle control device according to any one of the first to fifth aspects, in which the suppression unit is configured to suppress the restriction by temporarily interrupting execution of the protection control.

A seventh aspect of the present disclosure relates to the vehicle control device according to any one of the first to sixth aspects, in which the suppression unit is configured to suppress the restriction such that a decrease amount in a case where the current is decreased in the protection control is smaller than a decrease amount in a case where the predetermined situation has not occurred.

An eighth aspect of the present disclosure relates to the vehicle control device according to any one of the first to seventh aspects, in which the suppression unit is configured to suppress the restriction such that a lower limit value in a case where the current is decreased in the protection control is larger than a lower limit value in a case where the predetermined situation has not occurred.

A ninth aspect of the present disclosure relates to the vehicle control device according to any one of the first to eighth aspects, in which the situation determination unit is configured to determine that the predetermined situation has occurred in a case where a deviation between vehicle heights of right and left wheels is larger than a right-and-left wheel deviation threshold value set in advance.

A tenth aspect of the present disclosure relates to the vehicle control device according to any one of the first to ninth aspects, in which the situation determination unit is configured to determine that the predetermined situation has occurred in a case where a transfer case mounted in the vehicle is set to a LOW range representing a low speed or in a case where a differential gear mounted in the vehicle is set to a differential lock representing a lock.

An eleventh aspect of the present disclosure relates to the vehicle control device according to any one of the first to tenth aspects, in which the situation determination unit is configured to determine that the predetermined situation has occurred in a case where a magnitude of the current supplied to the electric motor to control the operation is larger than a magnitude of an upper limit value set in advance.

A twelfth aspect of the present disclosure relates to the vehicle control device according to any one of the first to eleventh aspects, further including a restore command unit configured to restore the restriction of the protection control suppressed by the suppression unit in the predetermined situation to the restriction of the protection control before being suppressed by the suppression unit in the predetermined situation, in a case where the predetermined situation is changed to a stable situation where the operation is not changed, based on the traveling environment.

A thirteenth aspect of the present disclosure relates to the vehicle control device according to any one of the first to twelfth aspects, in which, among a drive system for driving the wheel, a brake system for braking the wheel, and a steering system for turning the wheel, the electric motor is provided in at least the steering system.

A fourteenth aspect of the present disclosure relates to the vehicle control device according to the thirteenth aspects, in which the steering system is a steer-by-wire type steering system including an operation device including an operation member operated by a driver, a turning device including the electric motor and configured to turn the one wheel, and a controller configured to control the current supplied to the electric motor to realize turning of the one wheel in accordance with an operation of the operation member via the turning device.

A fifteenth aspect of the present disclosure relates to the vehicle control device according to the thirteenth aspect, in which the steering system is a steer-by-wire type steering system including an operation device including an operation member operated by a driver, a pair of turning devices configured to turn right and left wheels of the vehicle, respectively, and a controller configured to control the current supplied to the electric motor provided in each of the turning devices to realize turning of each of the right and left wheels in accordance with an operation of the operation member via each of the turning devices.

**Claims**

1. A vehicle control device (10) comprising:

   an acquisition unit (111) configured to acquire traveling environment information representing a traveling environment of a vehicle including an electric motor configured to control an operation of at least one wheel (3);
   a situation determination unit (112) configured to determine whether or not a predetermined situation where a disturbance acts on the at least one wheel (3) such that the operation is changed has occurred, based on the traveling environment information; and
   a suppression unit (113) configured to suppress restriction of protection control of protecting the electric motor by restricting a current supplied to the electric motor, in a case where the predetermined situation has occurred.

2. The vehicle control device (10) according to claim 1, further comprising:

   a cutoff operation determination unit (114) configured to determine presence or absence of a cutoff operation of cutting off supply of the current in the predetermined situation;
   a situation change determination unit (115) configured to determine whether or not the predetermined situation is changed to a stable situation where the operation is not changed, in a case where the cutoff operation is performed; and
   a permission unit (116) configured to permit execution of a cutoff process in accordance with the cutoff operation, in a case where the predetermined situation is changed to the stable situation.

3. The vehicle control device (10) according to claim 2, further comprising a notification unit (117) configured to notify, in a case where the cutoff operation is performed and the predetermined situation is not changed to the stable situation, that the cutoff process is not executable.

4. The vehicle control device (10) according to claim 1, wherein the predetermined situation is a situation where an obstacle capable of changing the operation by applying the disturbance to the at least one wheel (3) is present.

5. The vehicle control device (10) according to claim 1, wherein the predetermined situation is a situation where the vehicle travels on an uneven road.

6. The vehicle control device (10) according to claim 1, wherein the suppression unit (113) is configured to suppress the restriction by temporarily interrupting execution of the protection control.

7. The vehicle control device (10) according to claim 1, wherein the suppression unit (113) is configured to suppress the restriction such that a decrease amount in a case where the current is decreased in the protection control is smaller than a decrease amount in a case where the predetermined situation has not occurred.

8. The vehicle control device (10) according to claim 1, wherein the suppression unit (113) is configured to suppress the restriction such that a lower limit value in a case where the current is decreased in the protection control is larger than a lower limit value in a case where the predetermined situation has not occurred.

9. The vehicle control device (10) according to claim 1, wherein:

   the at least one wheel (3) includes right and left wheels of the vehicle; and
   the situation determination unit (112) is configured to determine that the predetermined situation has occurred in a case where a deviation between vehicle heights of the right and left wheels is larger than a right-and-left wheel deviation threshold value set in advance.

10. The vehicle control device (10) according to claim 1, wherein the situation determination unit (112) is configured to determine that the predetermined situation has occurred in a case where a transfer case mounted in the vehicle is set to a LOW range representing a low speed or in a case where a differential gear mounted in the vehicle is set to a differential lock representing a lock.

11. The vehicle control device (10) according to claim 1, wherein the situation determination unit (112) is configured to determine that the predetermined situation has occurred in a case where a magnitude of the current supplied to the electric motor to control the operation is larger than a magnitude of an upper limit value set in advance.

12. The vehicle control device (10) according to claim 1, further comprising a restore command unit (118) configured to restore the restriction of the protection control suppressed by the suppression unit (113) in the predetermined situation to the restriction of the protection control before being suppressed by the suppression unit (113) in the predetermined situation, in a case where the predetermined situation is changed to a stable situation where the operation is not changed, based on the traveling environment.

13. The vehicle control device (10) according to claim 1, wherein, among a drive system for driving the at least one wheel (3), a brake system (9) for braking the at least one wheel (3), and a steering system (5) for turning the wheel (3), the electric motor is provided in at least the steering system (5).

14. The vehicle control device (10) according to claim 13, wherein the steering system (5) is a steer-by-wire type steering system (5) including:

an operation device (51) including an operation member operated by a driver;
a turning device (52) including the electric motor and configured to turn the at least one wheel (3); and
a controller configured to control the current supplied to the electric motor to realize turning of the at least one wheel (3) in accordance with an operation of the operation member via the turning device (52).

15. The vehicle control device (10) according to claim 13, wherein:

the at least one wheel (3) includes right and left wheels of the vehicle; and
the steering system (5) is a steer-by-wire type steering system (5) including:

an operation device (51) including an operation member operated by a driver;
a pair of turning devices (58) configured to turn the right and left wheels, respectively; and
a controller configured to control the current supplied to the electric motor provided in each of the turning devices (58) to realize turning of each of the right and left wheels in accordance with an operation of the operation member via each of the turning devices (58).

# FIG. 1

# FIG. 2

# FIG. 3

CONTROL PROGRAM — S10

ACQUIRE TRAVELING
ENVIRONMENT INFORMATION Je — S11

S12

$|H1 - H2| > Hs?$
OR
IS LS or DS ACQUIRED?
OR
$I > Ijs?$

No →

Yes

TEMPORARILY
INTERRUPT PROTECTION CONTROL — S13
OR
EXECUTE PROTECTION CONTROL BY
SETTING LOWER LIMIT VALUE Ik

EXECUTE NORMAL
PROTECTION CONTROL — S14

IS CUTOFF OPERATION
PERFORMED? — S15

No →

Yes

$I \leq Ijs?$ — S16

No →

Yes

PERMIT CUTOFF
PROCESS — S17

EXECUTE NOTIFICATION
PROCESS — S18

END — S19

# FIG. 4

# FIG. 5

(a)

(b)

(c)

# FIG. 6

# FIG. 7

# FIG. 8

CONTROL — S100

ACQUIRE TRAVELING
ENVIRONMENT INFORMATION Je — S111

S112
IH1 – H2I > Hs?
OR
IS LS or DS ACQUIRED?
OR
IR > Ijs?
OR
IL > Ijs?

No →

Yes

TEMPORARILY
INTERRUPT PROTECTION CONTROL
OR
EXECUTE PROTECTION CONTROL BY
SETTING LOWER LIMIT VALUE Ik — S113

EXECUTE NORMAL
PROTECTION CONTROL — S114

IS CUTOFF OPERATION
PERFORMED? — S115

No →

Yes

IR ≤ Ijs?
AND
IL ≤ Ijs? — S116

No →

Yes

EXECUTE CUTOFF
PROCESS — S117

EXECUTE NOTIFICATION
PROCESS — S118

END — S119

# FIG. 9

(a)

V

TIME

(b)

IR

Ijs

TIME

(c)

IL

Ijs

TIME

(d)

IL

Ijs

Ik

TIME

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 867 555 A1 (JTEKT CORP [JP]) 19 December 2007 (2007-12-19) | 1-6,9-15 | INV. B60L3/12 |
| A | * paragraph [0001] - paragraph [0013]; figure 1 * * paragraph [0015] - paragraph [0019]; figure 2 * * paragraph [0031] - paragraph [0036]; figure 3 * | 7,8 | B62D5/04 |
| | - - - - - | | |
| X | JP 2007 030678 A (TOYOTA MOTOR CORP) 8 February 2007 (2007-02-08) | 1,7,8 | |
| A | * paragraph [0001] - paragraph [0018] * | 2-6,9-15 | |
| | - - - - - | | |
| A | EP 3 398 832 A1 (MITSUBISHI ELECTRIC CORP [JP]) 7 November 2018 (2018-11-07) * paragraph [0011] - paragraph [0016]; figure 1 * | 1,13-15 | |
| | - - - - - | | |
| A | US 2013/345918 A1 (OZAKI TAKAYOSHI [JP]) 26 December 2013 (2013-12-26) * paragraph [0062] * | 1,3 | |
| | - - - - - | | TECHNICAL FIELDS SEARCHED (IPC) |
| | | | B60L B62D |

The present search report has been drawn up for all claims

| Place of search | Date of completion of the search | Examiner |
|---|---|---|
| The Hague | 8 May 2025 | Utz, Tilman |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 5818

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2025

| Patent document cited in search report | | Publication date | Patent family member(s) | | Publication date |
|---|---|---|---|---|---|
| EP 1867555 | A1 | 19-12-2007 | EP | 1867555 A1 | 19-12-2007 |
| | | | JP | 4587050 B2 | 24-11-2010 |
| | | | JP | 2007331481 A | 27-12-2007 |
| | | | US | 2007288143 A1 | 13-12-2007 |
| JP 2007030678 | A | 08-02-2007 | JP | 4645343 B2 | 09-03-2011 |
| | | | JP | 2007030678 A | 08-02-2007 |
| EP 3398832 | A1 | 07-11-2018 | CN | 108367774 A | 03-08-2018 |
| | | | EP | 3398832 A1 | 07-11-2018 |
| | | | JP | WO2017115411 A1 | 22-03-2018 |
| | | | US | 2020247462 A1 | 06-08-2020 |
| | | | WO | 2017115411 A1 | 06-07-2017 |
| US 2013345918 | A1 | 26-12-2013 | CN | 103442930 A | 11-12-2013 |
| | | | EP | 2684730 A1 | 15-01-2014 |
| | | | JP | 5784930 B2 | 24-09-2015 |
| | | | JP | 2012186929 A | 27-09-2012 |
| | | | US | 2013345918 A1 | 26-12-2013 |
| | | | WO | 2012121199 A1 | 13-09-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023008160 A